# EUROPÄISCHE PATENTSCHRIFT

(11) **EP 3 411 866 B1**
(45) Veröffentlichungstag und Bekanntmachung des Hinweises auf die Patenterteilung: **10.01.2024**
(21) Anmeldenummer: 17702367.8
(22) Anmeldetag: 31.01.2017
(51) Int. Cl.: G08G 1/0965, G08G 1/0967, G08G 1/16

(54) **VERFAHREN, VORRICHTUNGEN UND COMPUTERPROGRAMME ZUM BEREITSTELLEN VON INFORMATION ÜBER EINE GEFAHRENSITUATION ÜBER EINE FAHRZEUG-ZU-FAHRZEUG-SCHNITTSTELLE**
METHODS, DEVICES AND COMPUTER PROGRAMS FOR PROVIDING INFORMATION ABOUT A DANGEROUS SITUATION ON A VEHICLE-TO-VEHICLE INTERFACE
PROCÉDÉS, DISPOSITIFS ET PROGRAMMES INFORMATIQUES PERMETTANT DE FOURNIR DES INFORMATIONS SUR UNE SITUATION DE DANGER SUR UNE INTERFACE VÉHICULE À VÉHICULE

(30) Priorität: 03.02.2016 DE 102016201662; 05.02.2016 DE 102016201794
(43) Veröffentlichungstag der Anmeldung: 12.12.2018
(73) Patentinhaber: Volkswagen Aktiengesellschaft, 38440 Wolfsburg (DE)
(72) Erfinder: BIEHLE, Thomas, 29393 Groß Oesingen (DE); SCHULTZ, Holger, 14612 Falkensee (DE)
(86) Internationale Anmeldenummer: PCT/EP2017/052026
(87) Internationale Veröffentlichungsnummer: WO 2017/134046

(56) Entgegenhaltungen:
- DE-A1-102013 005 903
- GB-A- 2 149 169

## Beschreibung

Die Erfindung bezieht sich auf Verfahren, Vorrichtungen und Computerprogramme zum Bereitstellen von Information über eine Gefahrensituation über eine Fahrzeug-zu-Fahrzeug-Schnittstelle, spezifischer, aber nicht ausschließlich, basierend auf Information über ein Auslösen von zumindest einer Funktion des Fahrzeugs.

Fahrzeug-zu-Fahrzeug-Kommunikation (auch engl. Car2Car, C2C, oder Vehicle2Vehicle, V2V) und Fahrzeug-zu-Infrastruktur-Kommunikation (auch engl. Car2lnfrastructure, C2I oder Vehicle2Roadside, V2R) sind ein Brennpunkt automobiler Forschung im 21. Jahrhundert. Die Kommunikation zwischen Fahrzeugen oder zwischen Fahrzeugen oder Verkehrsinfrastruktur ermöglicht eine Vielzahl neuer Möglichkeiten, beispielsweise eine Koordination von Fahrzeugen untereinander oder eine Kommunikation von Fahrzeugen mit der Verkehrsinfrastruktur, beispielsweise um den Fahrzeugen Stauwarnungen bereitzustellen. Dabei besitzen Fahrzeuge, die zur C2C oder C2I (auch zusammengefasst unter Fahrzeug-zu-X-Kommunikation, engl. Car2X, C2X oder Vehicle2X, V2X) ausgebildet sind eine Sende- und Empfangseinheit um mit anderen Fahrzeugen kommunizieren zu können, beispielsweise über direkte Funkverbindungen oder Mobilfunknetzwerke. Die Kommunikation kann dabei beispielsweise zwischen Fahrzeugen oder zwischen Fahrzeugen und Verkehrsinfrastruktur innerhalb eines Radius von wenigen hundert Metern begrenzt sein.

Eine Funktionalität, die für Fahrzeug-zu-Fahrzeug-Kommunikation angedacht ist, ist eine Warnfunktion für Fahrzeuge in einer Umgebung. Bei Unfällen kann ein Fahrzeug beispielsweise eine Nachricht aussenden und Fahrzeuge, die sich der Unfallstelle nähern, warnen. Allerdings kann es wünschenswert sein, Warnungen auszusenden, bevor der Unfall geschieht, so dass beispielsweise Fahrzeuge in einer unmittelbaren Umgebung schneller reagieren können.

Aus GB 2 149 169 A ist bekannt, dass Fahrzeuge, die über Warnblinkleuchten verfügen, diese automatisch basierend auf Sensordaten des Fahrzeugs aktivieren können. Zu den Sensordaten gehören beispielsweise Sensordaten bezüglich der Motortemperatur, des Lenkwinkels, einem Austreten von Motoröl, einer Beschleunigung oder eines Abbremsens, eines Reifendrucks, oder eines Aktivierens eines Warnblinkschalters.

Aus DE 10 2013 005 903 A1 ist zudem eine Vorrichtung und Verfahren zur Warnung von Verkehrsteilnehmern vor einer Verkehrsgefährdung bekannt. Dort wird im Ansprechen auf ein Aktivieren einer Sondersignaleinrichtung und/oder eines Sondereinsatzfahrzeugmoduls eines Fortbewegungsmittels und Verifikation einer weiteren Bedingung automatisch eine vordefinierte Nachricht zur Warnung der Verkehrsteilnehmer durch das Fortbewegungsmittel versendet. Dabei wird eine Aktivität des Fahrers des Fahrzeugs jedoch außer Acht gelassen.

Es besteht der Bedarf nach einem verbesserten Konzept zum Bereitstellen von Information über eine Gefahrensituation. Diesem Bedarf wird durch die unabhängigen Ansprüche Rechnung getragen.

Ausführungsbeispiele können dies beispielsweise durch Auswerten von Information über ein Auslösen von Funktionen des Fahrzeugs, etwa von Aktiven Sicherheitssystemen oder von Signaleinrichtungen eines Sondereinsatzfahrzeugs, erreichen. Werden solche Sicherheitssysteme ausgelöst, und sind gegebenenfalls noch weitere Bedingungen erfüllt, so kann ein Fahrzeug weiteren Fahrzeugen in der Umgebung über eine Fahrzeug-zu-Fahrzeug-Schnittstelle ein Warnsignal bereitstellen, so dass diese die respektiven Fahrer warnen können.

Ausführungsbeispiele schaffen ein Verfahren für ein Fahrzeug. Das Verfahren umfasst Erhalten von Information über ein Auslösen von ein oder mehreren Funktionen des Fahrzeugs. Das Verfahren umfasst ferner Bestimmen einer Gefahrensituation, basierend auf den ein oder mehreren ausgelösten Funktionen des Fahrzeugs, und abhängig von einer aktuellen Aktivität eines Fahrers des Fahrzeugs. Das Verfahren umfasst ferner Bereitstellen von Information über die Gefahrensituation über eine Fahrzeug-zu-Fahrzeug-Schnittstelle. Durch Bereitstellen der Information über die Gefahrensituation basierend auf dem Auslösen der zumindest einen Funktion des Fahrzeugs können Fahrzeuge in einer Umgebung frühzeitig auf Gefahrensituationen aufmerksam gemacht werden.

Beispielsweise kann die aktuelle Aktivität des Fahrers des Fahrzeugs einem Steuern des Fahrzeugs entsprechen. Die ein oder mehreren Funktionen können zumindest ein aktives Sicherheitssystem der Gruppe von Sicherheitssystem zum Auslösen eines Blinkers basierend auf einer Notbremsung, Sicherheitssystem zum autonomem Bremseingriff und Sicherheitssystem für ein reversibles Fahrzeuginsassen-Rückhaltesystems umfassen. Durch Bereitstellen der Information über die Gefahrensituation basierend auf dem Auslösen des zumindest einen aktiven Sicherheitssystems können Fahrzeuge in einer Umgebung frühzeitig auf Gefahrensituationen aufmerksam gemacht werden.

Beispielsweise kann die Information über das Auslösen von ein oder mehreren Funktionen des Fahrzeugs Information über ein Auslösen des zumindest einen aktiven Sicherheitssystems umfassen. Die Information über das Auslösen des zumindest einen aktiven Sicherheitssystems kann auf einer Erkennung eines drohenden Unfalls basieren. Das Erhalten der Information über das Auslösen von ein oder mehreren Funktionen des Fahrzeugs kann vor einem drohenden Unfall geschehen. Beispielsweise kann das aktive Sicherheitssystem ausgebildet sein, um die Information über das Auslösen des aktiven Sicherheitssystems vor einem drohenden Unfall bereitzustellen. Das Bereitstellen der Information über die Gefahrensituation vor einem Unfall kann es nachfolgenden Fahrzeugen ermöglichen, auf die Gefahrensituation besser zu reagieren.

Beispielsweise kann das Bereitstellen durchgeführt werden, wenn die Information über das Auslösen des zumindest einen aktiven Sicherheitssystems ein Auslösen des Sicherheitssystems anzeigt. Alternativ oder zusätzlich kann das Verfahren ferner ein Erhalten von Information über eine Geschwindigkeit des Fahrzeugs umfassen. Das Bereitstellen der Information über die Gefahrensituation kann beispielsweise durchgeführt werden, wenn (falls) die Information über die Geschwindigkeit des Fahrzeugs ein starkes Abbremsen des Fahrzeugs anzeigt. In manchen Ausführungsbeispielen kann die Information über die Geschwindigkeit des Fahrzeugs Information über eine Geschwindigkeitsänderung des Fahrzeugs umfassen. Die Information über die Geschwindigkeitsänderung kann beispielsweise genutzt werden, um einen Abbremsvorgang zu erkennen. Ein Validieren des Auslösens des zumindest einen aktiven Sicherheitssystems durch Prüfen eines Bremsvorgangs kann eine Zuverlässigkeit des Bereitstellens erhöhen.

Beispielsweise kann die Information über das Auslösen von ein oder mehreren Funktionen des Fahrzeugs ein oder mehrere Indikatoren über einen Einsatz des Fahrzeugs als Sondereinsatzfahrzeug umfassen. Beispielsweise kann das Bestimmen der Gefahrensituation Information über einen Einsatz des Fahrzeugs als Sondereinsatzfahrzeug so bestimmen, dass die Information über den Einsatz des Sondereinsatzfahrzeugs anzeigt, dass das Fahrzeug 100 als Sondereinsatzfahrzeug eine Gefahrenstelle sichert wenn die ein oder mehreren Indikatoren über den Einsatz des Fahrzeugs als Sondereinsatzfahrzeug ein Auslösen einer Rundumkennleuchte des Fahrzeugs anzeigen, wenn Information über einen Fahrzustand des Fahrzeugs anzeigt, dass das Fahrzeug steht, und wenn die aktuelle Aktivität des Fahrers einem Sichern einer Unfallstelle entspricht. So können nachfolgende Fahrzeuge vor der Gefahrenstelle gewarnt werden und etwa eine Sicherheit des Fahrers des Sondereinsatzfahrzeugs durch erhöhte Aufmerksamkeit erhöhen.

Beispielsweise kann die aktuelle Aktivität des Fahrers einem Sichern einer Unfallstelle entsprechen, wenn eine Tür des Fahrzeugs (des Sondereinsatzfahrzeugs) geöffnet ist. Alternativ oder zusätzlich kann die aktuelle Aktivität des Fahrers einem Sichern einer Unfallstelle entsprechen, falls eine Ladeklappe des Fahrzeugs geöffnet ist. Alternativ oder zusätzlich kann die aktuelle Aktivität des Fahrers einem Sichern einer Unfallstelle entsprechen, falls ein Fahrersitz des Fahrzeugs besetzt ist.

Beispielsweise kann das Verfahren ferner Erhalten von Information über einen Fahrzustand des Fahrzeugs umfassen. Der Fahrzustand kann anzeigen, ob das Fahrzeug fährt oder steht. Beispielsweise kann das Bestimmen die Information über den Einsatz des Sondereinsatzfahrzeugs so bestimmen, dass die Information über den Einsatz des Sondereinsatzfahrzeugs anzeigt, dass das Fahrzeug als Sondereinsatzfahrzeug fährt und sich in einem Einsatz befindet wenn die ein oder mehreren Indikatoren anzeigen, dass eine Sirene des Fahrzeugs aktiviert ist und dass eine Rundumkennleuchte des Fahrzeugs aktiviert ist, und wenn die Information über den Fahrzustand anzeigt, dass das Fahrzeug fährt. Ein Erkennen des Einsatzes und Bereitstellen von Information über den Einsatz des Sondereinsatzfahrzeugs basierend auf den Indikatoren und dem Fahrzustand reduziert einen Arbeitsaufwand des Personals des Sondereinsatzfahrzeugs und erhöht eine Fahrsicherheit des Sondereinsatzfahrzeugs und von Fahrzeugen in einer Umgebung des Sondereinsatzfahrzeugs.

Alternativ oder zusätzlich kann das Bestimmen die Information über den Einsatz des Sondereinsatzfahrzeugs so bestimmen, dass die Information über den Einsatz des Sondereinsatzfahrzeugs anzeigt, dass das Fahrzeug als Sondereinsatzfahrzeug eine Gefahrenstellen sichert, wenn die Information über den Fahrzustand anzeigt, dass das Fahrzeug steht und die ein oder mehreren Indikatoren anzeigen, dass eine Rundumkennleuchte des Fahrzeugs aktiviert ist, und die Information über den Fahrzustand ferner anzeigt, dass eine Zündung des Fahrzeugs aktiviert ist, oder die ein oder mehreren Indikatoren anzeigen, dass eine Warnblinkeinheit des Fahrzeugs aktiviert ist und eine Standbremsfunktionalität des Fahrzeugs aktiviert ist, oder die ein oder mehreren Indikatoren anzeigen, dass eine Warnblinkeinheit des Fahrzeugs aktiviert ist und ein Zeitmesser anzeigt, dass das Fahrzeug länger als ein erster Zeitschwellenwert steht. Ein Erkennen des Einsatzes und Bereitstellen von Information über den Einsatz des Sondereinsatzfahrzeugs basierend auf den Indikatoren und dem Fahrzustand reduziert einen Arbeitsaufwand des Personals des Sondereinsatzfahrzeugs und erhöht eine Fahrsicherheit des Sondereinsatzfahrzeugs und von Fahrzeugen in einer Umgebung des Sondereinsatzfahrzeugs.

Beispielsweise kann das Fahrzeug einem Abschlepp- oder Pannenfahrzeug entsprechen. Das Bestimmen kann die Gefahrensituation so bestimmen, dass die Information über die Gefahrensituation anzeigt, dass das Fahrzeug als Sondereinsatzfahrzeug einem stationären Abschlepp- oder Pannenfahrzeug entspricht wenn die Information über den Fahrzustand anzeigt, dass das Fahrzeug steht und die ein oder mehreren Indikatoren anzeigen, dass eine Rundumkennleuchte des Fahrzeugs aktiviert ist und dass eine Warnblinkeinheit des Fahrzeugs aktiviert ist, und eine Standbremsfunktionalität des Fahrzeugs aktiviert ist, oder ein Zeitmesser anzeigt, dass das Fahrzeugs länger als ein erster Zeitschwellenwert steht. Ein Erkennen des Einsatzes und Bereitstellen von Information über den Einsatz des Sondereinsatzfahrzeugs basierend auf den Indikatoren und dem Fahrzustand reduziert einen Arbeitsaufwand des Personals des Sondereinsatzfahrzeugs und erhöht eine Fahrsicherheit des Sondereinsatzfahrzeugs und von Fahrzeugen in einer Umgebung des Sondereinsatzfahrzeugs.

In manchen Ausführungsbeispielen kann das Bereitstellen ein Bereitstellen einer Decentralized Environmental Notification Message, DENM, umfassen. Die Fahrzeug-zu-Fahrzeug-Schnittstelle kann beispielsweise ausgebildet sein, um, gemäß Fahrzeug-zu-Fahrzeug-Kommunikationsstandard 802.11 p zu kommunizieren. Das Bereitstellen kann beispielsweise einem direkten Bereitstellen für Fahrzeuge in einer Umgebung der Fahrzeug-zu-Fahrzeug-Schnittstelle entspricht. Ein direktes, broadcast-basiertes, Bereitstellen der Information über den Einsatz des Sondereinsatzfahrzeugs kann eine Latenz der Übertragung verringern und ermöglichen, dass Fahrzeuge in einer Umgebung des Sondereinsatzfahrzeugs die Information über den Einsatz des Sondereinsatzfahrzeugs erhalten.

In manchen Ausführungsbeispielen kann das Bestimmen ferner ein Bestimmen einer Position und/oder Trajektorie des Fahrzeugs umfassen. Die Information über die Gefahrensituation kann ferner Information über die Position und/oder Information über die Trajektorie des Fahrzeugs (etwa als Sondereinsatzfahrzeug) umfassen. Die Information über die Position und/oder die Trajektorie des Fahrzeugs ermöglicht eine zielgerichtete Warnung von weiteren Fahrzeugen.

Ausführungsbeispiele schaffen ferner ein Verfahren für ein Fahrzeug. Das Verfahren umfasst ferner Erhalten von Information über eine Gefahrensituation von einem weiteren Fahrzeug über eine Fahrzeug-zu-Fahrzeug-Schnittstelle. Die Information über die Gefahrensituation basiert auf Information über ein Auslösen von ein oder mehreren Funktionen des Fahrzeugs und auf einer Aktivität eines Fahrers des Fahrzeugs. Das Verfahren umfasst ferner Bestimmen einer Warnbenachrichtigung, basierend auf der Information über die Gefahrensituation. Das Verfahren umfasst ferner Bereitstellen der Warnbenachrichtigung über ein Ausgabemodul.

Ausführungsbeispiele schaffen ferner ein Programm mit einem Programmcode zum Durchführen zumindest eines der Verfahren wenn der Programmcode auf einem Computer, einem Prozessor, einem Kontrollmodul oder einer programmierbaren Hardwarekomponente ausgeführt wird.

Ausführungsbeispiele schaffen ferner eine Vorrichtung für ein Fahrzeug. Die Vorrichtung umfasst zumindest eine Schnittstelle, ausgebildet zum Erhalten von Information über ein Auslösen von ein oder mehreren Funktionen des Fahrzeugs. Die Vorrichtung umfasst ferner ein Kontrollmodul, ausgebildet zum Bestimmen einer Gefahrensituation, basierend auf den ein oder mehreren ausgelösten Funktionen des Fahrzeugs, und abhängig von einer aktuellen Aktivität eines Fahrers des Fahrzeugs. Das Kontrollmodul ist ferner ausgebildet zum Bereitstellen von Information über die Gefahrensituation über eine Fahrzeug-zu-Fahrzeug-Schnittstelle.

Ausführungsbeispiele schaffen ferner eine Vorrichtung für ein Fahrzeug. Die Vorrichtung umfasst eine Fahrzeug-zu-Fahrzeug-Schnittstelle, ausgebildet zum Erhalten von Information über eine Gefahrensituation von einem weiteren Fahrzeug. Die Information über die Gefahrensituation basiert auf Information über ein Auslösen von ein oder mehreren Funktionen des Fahrzeugs und auf einer Aktivität eines Fahrers des Fahrzeugs. Die Vorrichtung umfasst ferner ein Kontrollmodul, ausgebildet zum Bestimmen einer Warnbenachrichtigung, basierend auf der Information über die Gefahrensituation. Das Kontrollmodul ist ferner ausgebildet zum Bereitstellen der Warnbenachrichtigung über ein Ausgabemodul.

Weitere vorteilhafte Ausgestaltungen werden nachfolgend anhand der in den Zeichnungen dargestellten Ausführungsbeispiele, auf welche die Ausführungsbeispiele generell jedoch nicht insgesamt beschränkt sind, näher beschrieben. Es zeigen:
- Fig. 1a: zeigt ein Flussdiagramm eines Verfahrens zum Bereitstellen von Information über eine Gefahrensituation;
- Fig. 1b: zeigt ein Flussdiagramm eines Verfahrens zum Bereitstellen von Information über eine Gefährdung;
- Fig. 1c: zeigt ein Flussdiagramm eines Verfahrens zum Bereitstellen von Information über einen Einsatz eines Sondereinsatzfahrzeugs;
- Fig. 2a: zeigt ein Blockdiagramm einer Vorrichtung zum Bereitstellen von Information über eine Gefahrensituation;
- Fig. 2b: zeigt ein Blockdiagramm einer Vorrichtung zum Bereitstellen von Information über eine Gefährdung;
- Fig. 2c: zeigt ein Blockdiagramm einer Vorrichtung zum Bereitstellen von Information über einen Einsatz eines Sondereinsatzfahrzeugs;
- Fig. 3a-c: zeigen Flussdiagramme von Verfahren zum Bereitstellen einer Warnbenachrichtigung;
- Fig. 4a-c: zeigen Blockdiagramme von Vorrichtungen zum Bereitstellen einer Warnbenachrichtigung;
- Fig. 5-6: zeigen Ausführungsbeispiele von Verfahren zum Bereitstellen von Information über eine Gefährdung; und
- Fig.7: zeigt ein Ausführungsbeispiel eines Verfahrens zum Bereitstellen von Information über einen Einsatz eines Sondereinsatzfahrzeugs.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Es ist nicht beabsichtigt, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen " einer," " eine", "eines " und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

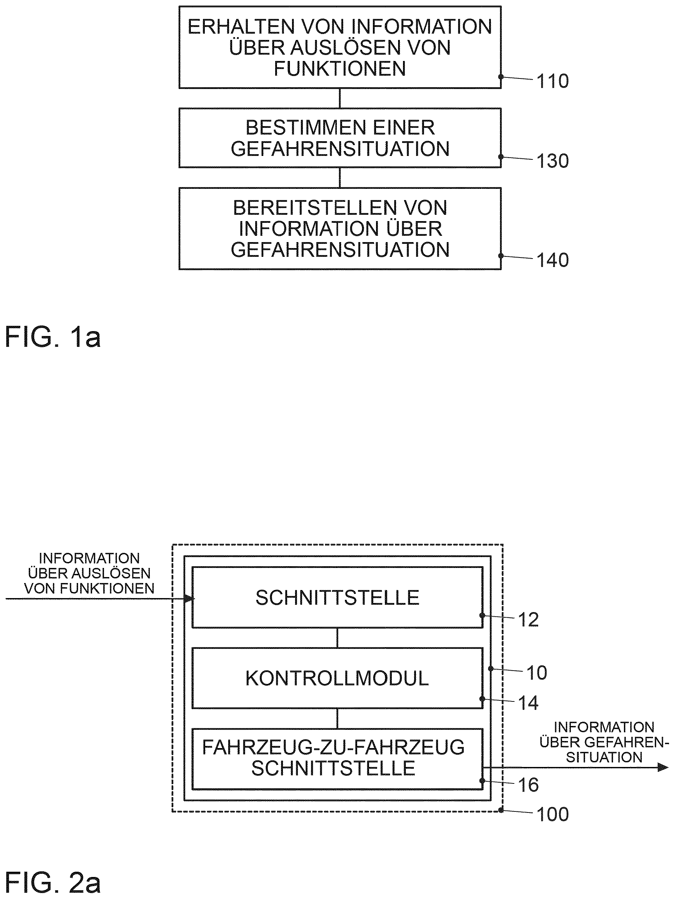

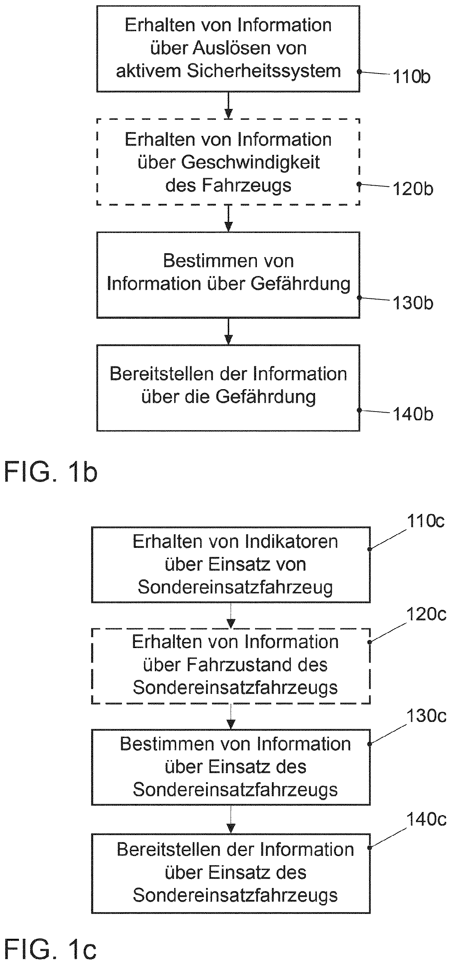

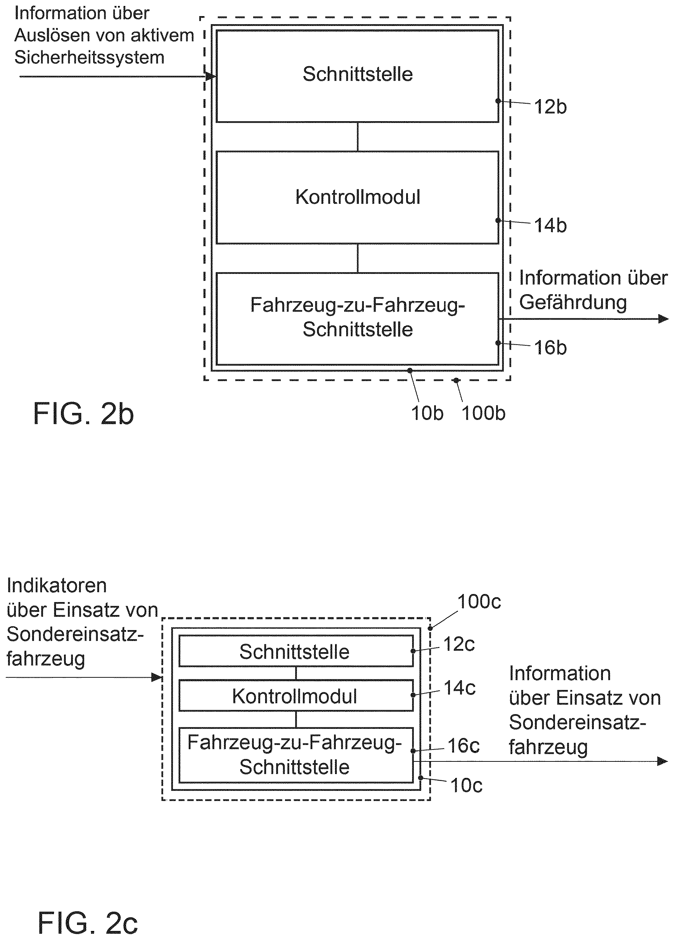

Fig. 1a zeigt ein Flussdiagramm eines Verfahrens für ein Fahrzeug 100. Das Verfahren kann ähnlich implementiert sein wie zumindest eines der Verfahren, die in den Figuren 1b und 1c eingeführt werden. Fig. 2a zeigt ein Blockdiagramm eines Ausführungsbeispiels einer entsprechenden Vorrichtung 10 für das Fahrzeug mit einer Schnittstelle 12 und einem Kontrollmodul 14 und einer Fahrzeug-zu-Fahrzeug-Schnittstelle 16. Das Kontrollmodul 14 ist mit der Schnittstelle 12 und der Fahrzeug-zu-Fahrzeug-Schnittstelle 16 gekoppelt. Die Schnittstelle 12, das Kontrollmodul 14 und/oder die Fahrzeug-zu-Fahrzeug-Schnittstelle 16 können ähnlich implementiert sein wie eine Schnittstelle 12b/c, ein Kontrollmodul 14b/c und/oder ein Fahrzeug-zu-Fahrzeug-Schnittstelle 16b/c der Figuren 2b und/oder 2c.

Das Verfahren umfasst Erhalten 110 von Information über ein Auslösen von ein oder mehreren Funktionen des Fahrzeugs 100, etwa über die Schnittstelle 12. Beispielsweise kann die Information über das Auslösen der ein oder mehreren Funktionen des Fahrzeugs 100 Information über ein Auslösen von zumindest einem aktiven Sicherheitssystem des Fahrzeugs 100 umfassen oder entsprechen. Beispielsweise kann das Erhalten 110 der Information über das Auslösen von der ein oder mehreren Funktionen des Fahrzeugs einem Erhalten 110b von Information über ein Auslösen von zumindest einem aktiven Sicherheitssystem des Fahrzeugs entsprechen, wie es in Verbindung mit Fig. 1b eingeführt wird. Alternativ oder zusätzlich kann das Fahrzeug 100 beispielsweise ein Sondereinsatzfahrzeug sein und die Information über das Auslösen der ein oder mehreren Funktionen des Fahrzeugs 100 kann oder ein oder mehrere Indikatoren über einen Einsatz des Sondereinsatzfahrzeugs (des Fahrzeugs als Sondereinsatzfahrzeug) umfassen oder diesen entsprechen. Beispielsweise kann das Erhalten 110 der Information über das Auslösen von der ein oder mehreren Funktionen des Fahrzeugs einem Erhalten 110c von ein oder mehreren Indikatoren entsprechen, wie es in Verbindung mit Fig. 1b eingeführt wird

In zumindest manchen Ausführungsbeispielen kann das Fahrzeug 100 beispielsweise einem Landfahrzeug, einem Wasserfahrzeug, einem Luftfahrzeug, einem Schienenfahrzeug, einem Straßenfahrzeug, einem Auto, einem Geländefahrzeug, einem Kraftfahrzeug, oder einem Lastkraftfahrzeug entsprechen.

Das Verfahren umfasst ferner Bestimmen 130 einer Gefahrensituation, basierend auf den ein oder mehreren ausgelösten Funktionen des Fahrzeugs 100, und abhängig von einer aktuellen Aktivität eines Fahrers des Fahrzeugs 100. Beispielsweise kann sich die aktuelle Aktivität des Fahrers konkludent ergeben. Beispielsweise kann die aktuelle Aktivität des Fahrers einem Steuern/Fahren/Nutzen des Fahrzeugs entsprechen, wenn das Fahrzeug fährt oder zumindest ein aktives Sicherheitssystem des Fahrzeugs ausgelöst wird. Beispielsweise kann die aktuelle Aktivität des Fahrers Fahren des Fahrzeugs als Sondereinsatzfahrzeug im Einsatz entsprechen, wenn ein oder mehrere Indikatoren anzeigen, dass sich das Fahrzeug (Sondereinsatzfahrzeug) im Einsatz befindet.

Beispielsweise kann das Bestimmen 130 der Gefahrensituation ein Bestimmen von Information über eine Gefährdung (etwa ein Bestimmen 130b von Information über eine Gefährdung, wie es in Fig. 1b eingeführt wird) umfassen oder entsprechen (etwa basierend auf der Information über ein Auslösen von zumindest einem aktiven Sicherheitssystem des Fahrzeugs 100). Beispielsweise kann die aktuelle Aktivität des Fahrers des Fahrzeugs 100 einem Fahren oder Steuern des Fahrzeugs 100 entsprechen. Beispielsweise kann das Fahren des Fahrzeugs durch den Fahrer des Fahrzeugs aus dem Auslösen des zumindest einen aktiven Sicherheitssystems hervorgehen oder von diesem angezeigt werden.

Beispielsweise kann das Bestimmen 130 der Gefahrensituation ein Bestimmen von Information über einen Einsatz des Sondereinsatzfahrzeugs (etwa ein Bestimmen 130c von Information über einen Einsatz des Sondereinsatzfahrzeugs, wie es in Fig. 1c eingeführt wird) umfassen oder entsprechen (etwa basierend auf den ein oder mehreren Indikatoren über den Einsatz des Sondereinsatzfahrzeugs). Beispielsweise kann die aktuelle Aktivität des Fahrers des Fahrzeugs (oder des Fahrzeugs selbst) zumindest einem Element der Gruppe von Fahren des Fahrzeugs als Sondereinsatzfahrzeug in einem Einsatz, einem Sichern einer Gefahrenstelle, und Einsetzen des Fahrzeugs als Abschlepp- oder Pannenfahrzeug entsprechen.

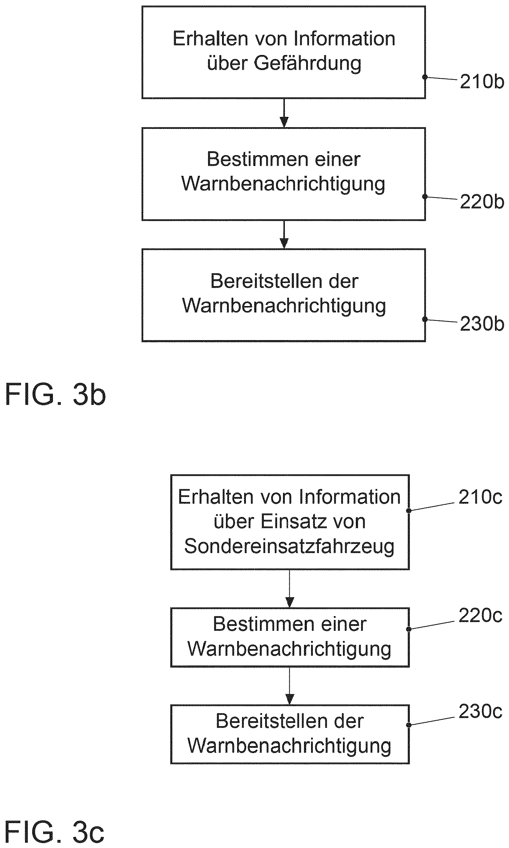

Das Verfahren umfasst ferner Bereitstellen 140 von Information über die Gefahrensituation über eine Fahrzeug-zu-Fahrzeug-Schnittstelle, etwa die Fahrzeug-zu-Fahrzeug-Schnittstelle 16. Beispielsweise kann die Information über die Gefahrensituation die Information über die Gefährdung und/oder die Information über den Einsatz des Sondereinsatzfahrzeugs umfassen. Beispielsweise kann das Bereitstellen 110 der Information über die Gefahrensituation ein Bereitstellen 140b einer Information über eine Gefährdung, wie es in Verbindung mit Fig. 1b eingeführt wird und/oder ein Bereitstellen 140c einer Information über einen Einsatz eines Sondereinsatzfahrzeugs, wie es in Verbindung mit Fig. 3c eingeführt wird, umfassen oder diesem entsprechen.

In konventionellen Systemen zur Warnung vor Gefährdungen auf Straßen werden meist Verkehrsflussdaten in zentralen Rechenzentren (Backend-Systemen) verarbeitet und genutzt, um zu erkennen, welche Verkehrssituation vorliegt und ob eine Gefährdung bestehen könnte. Systeme, die den Zustand der einzelnen Fahrzeuge einbeziehen sind nicht bekannt. Durch die Verarbeitung im Backend resultieren teilweise erhöhte Latenzzeiten und eine höhere Ungenauigkeit, da der Zustand eines Fahrzeuges häufig nicht einbezogen wird. In konventionellen Systemen sind meist lediglich frühzeitige Informationen ohne definierten Ort und genauere Hinweise möglich.

Ausführungsbeispiele der lokalen Gefahrenwarnung basieren auf einem Sender und Empfänger-Prinzip. Der Sender (vordere Fahrzeug) sendet eine gefährliche Situation und der Empfänger (hinteres Fahrzeug) kann diese Information empfangen und verarbeiten. Zumindest manche Ausführungsbeispiele betreffen eine Detektion einer gefährlichen Situation durch das vordere Fahrzeug basierend auf Auslösekriterien.

Die hier beschriebenen Auslösekriterien basieren auf den Auslösungen von Aktiven Sicherheitssystemen. Dazu gehören beispielsweise:
▪ Notbremsblinken (EEBL = Emergency Electronic Brake Light, Elektronisches Notfallbremslicht)
▪ Autonomer Bremseingriff (AWV = AnhalteWegVerkürzung)
▪ Reversible Insassen-Rückhaltesysteme, etwa zur Gurtstraffung vor einem Aufprall (PreCrash)

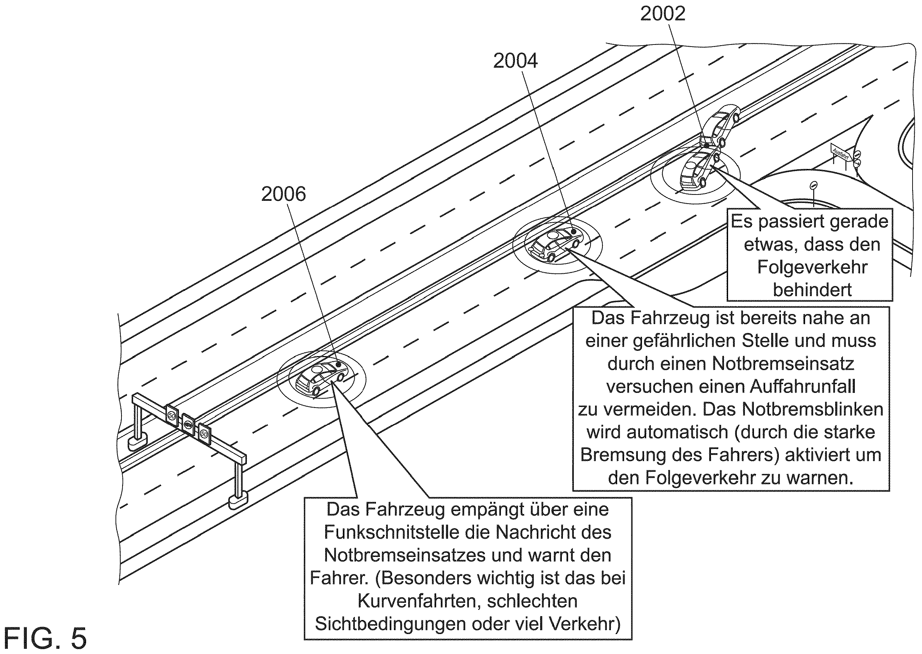

Fig. 5 zeigt ein Ausführungsbeispiel. Im Straßenverkehr passiert eine Situation 2002, die den Folgeverkehr behindert. Ein nachfolgendes Fahrzeug 2004 ist bereits nahe an der gefährlichen Stelle und muss durch einen Notbremseinsatz versuchen, einen Auffahrunfall zu vermeiden. Dabei kann durch die starke Bremsung beispielsweise ein Notbremsblinken aktiviert werden, um den Folgeverkehr zu warnen. In Ausführungsbeispielen kann beispielsweise zusätzlich Information über die Gefährdung über eine Fahrzeug-zu-Fahrzeug-Schnittstelle an Fahrzeuge in einer Umgebung bereitgestellt werden. Ein weiteres nachfolgendes Fahrzeug 2006 empfängt über die Fahrzeug-zu-Fahrzeug-Schnittstelle, die als Funkschnittstelle implementiert sein kann, die Information über die Gefährdung mit der Nachricht des Notbremseinsatzes und kann ausgebildet sein, um den Fahrer zu warnen. Dies kann bei Kurvenfahrten, schlechten Sichtbedingungen oder viel Verkehr besonders vorteilhaft sein.

Fig. 1b illustriert ein Flussdiagramm eines Ausführungsbeispiels des Verfahrens für ein Fahrzeug 100b. Das Verfahren kann ähnlich implementiert sein wie zumindest eines der Verfahren, die in den Fig. 1a und 1c eingeführt werden. Das Fahrzeug 100b kann Beispielsweise dem Fahrzeug 100 aus Fig. 1 entsprechen. Die aktuelle Aktivität des Fahrers des Fahrzeugs 100b entspricht einem Steuern/Fahren des Fahrzeugs 100b. Beispielsweise kann die aktuelle Aktivität des Fahrers einem Steuern/Fahren/Nutzen des Fahrzeugs entsprechen, wenn das zumindest eine aktive Sicherheitssystem ausgelöst wird. Die ein oder mehreren Funktionen umfassen zumindest ein aktives Sicherheitssystem der Gruppe von Sicherheitssystem zum Auslösen eines Blinkers basierend auf einer Notbremsung, Sicherheitssystem zum autonomem Bremseingriff und Sicherheitssystem für ein reversibles Fahrzeuginsassen-Rückhaltesystems. Fig. 2b illustriert ein Blockdiagramm eines Ausführungsbeispiels einer Vorrichtung 10b für das Fahrzeug 100b. Die Vorrichtung 10b kann beispielsweise ausgebildet sein, um das Verfahren auszuführen.

Das Verfahren umfasst Erhalten 110b von Information über ein Auslösen zumindest eines aktiven Sicherheitssystems. Das zumindest eine Sicherheitssystem kann beispielsweise ferner ein Elektronisches Stabilitätsprogramm umfassen. Die Vorrichtung 10b aus Fig. 2b umfasst zumindest eine Schnittstelle 12b, die ausgebildet ist zum Erhalten 110b von Information über ein Auslösen zumindest eines aktiven Sicherheitssystems. Die zumindest eine Schnittstelle 12b kann beispielsweise einem oder mehreren Eingängen und/oder einem oder mehreren Ausgängen zum Empfangen und/oder Übertragen von Informationen entsprechen, etwa in digitalen Bitwerten, basierend auf einem Code, innerhalb eines Moduls, zwischen Modulen, oder zwischen Modulen verschiedener Entitäten.

Beispielsweise kann die Information über das Auslösen von ein oder mehreren Funktionen des Fahrzeugs Information über ein Auslösen des zumindest einen aktiven Sicherheitssystems umfassen. In zumindest manchen Ausführungsbeispielen kann die Information über das Auslösen des zumindest einen aktiven Sicherheitssystems auf einer Erkennung eines drohenden Unfalls basieren. Beispielsweise kann das Erhalten 110b ein Erhalten von Nachrichten auf einem Fahrzeug-Kommunikationsbus, beispielsweise auf einem Steuergeräte-Netzwerkbus (auch engl. Controller Area Network Bus, CAN Bus) oder auf einem lokalen Verbindungsnetzwerk (auch engl. Local Interconnect Network, LIN) umfassen. Beispielsweise kann das Erhalten 110b ein Auslesen oder Überwachen von Datenpaketen umfassen, beispielsweise eingeschränkt durch einen Sender- oder Kopfdaten-basierten Filter. Die zumindest eine Schnittstelle 12b kann beispielsweise ausgebildet sein, um Daten über einen CAN-Bus oder ein LIN zu erhalten. Das Erhalten 110b der Information über das Auslösen des zumindest einen aktiven Sicherheitssystems kann beispielsweise vor einem drohenden Unfall geschehen. Das aktive Sicherheitssystem kann beispielsweise ausgebildet sein, um die Information über das Auslösen des aktiven Sicherheitssystems vor einem Unfall bereitzustellen. Alternativ oder zusätzlich kann das Erhalten 110b ferner ein Auslesen oder Abfragen von Werten in einem Kontrollregister oder einer Datenbank umfassen.

In zumindest manchen Ausführungsbeispielen kann das Verfahren ferner ein Erhalten 120b von Information über eine Geschwindigkeit des Fahrzeugs 100b umfassen. Die zumindest eine Schnittstelle 12b kann beispielsweise ferner ausgebildet sein zum Erhalten 120b von Information über eine Geschwindigkeit des Fahrzeugs 100b. Die Information über die Geschwindigkeit des Fahrzeugs 100b kann beispielsweise Information über eine Geschwindigkeitsänderung des Fahrzeugs umfassen. Die Information über die Geschwindigkeit und/oder die Geschwindigkeitsänderung des Fahrzeugs 100b kann beispielsweise über einen Fahrzeugbus, etwa den Steuergerätenetzwerk-Bus (auch engl. Controller Area Network) festgestellt werden, etwa basierend auf Datenpaketen auf dem CAN-Bus. Beispielsweise kann dabei gefilterte Information über die Beschleunigung genutzt werden, die um Sensorrauschen bereinigt ist. In manchen Ausführungsbeispielen kann die Information über die Beschleunigung nicht auf einem Globalen Satelliten-Positionierungssystem basieren.

Das Verfahren umfasst ferner Bestimmen 130b einer Information über eine Gefährdung, basierend auf der Information über das Auslösen des zumindest einen aktiven Sicherheitssystems. Die Information über die Gefährdung kann beispielsweise einer Decentralized Environmental Notification Message (DENM) eines Fahrzeug-zu-Fahrzeug-Kommunikationsprotokolls entsprechen. Beispielsweise kann die Information über die Gefährdung anzeigen, dass eine mögliche Gefährdung an einer Quelle der Information über die Gefährdung vorliegt. Beispielsweise kann die Information über die Gefährdung Information über eine Position der Gefährdung, des Fahrzeugs 100b oder der Quelle der Information über die Gefährdung umfassen. Beispielsweise kann die Positionierung für die Information über die Gefährdung auf einem satellitengestützten Positionierungssystem, etwa dem Globalen Positionierungs-System (GPS) basieren. Die Information über die Gefährdung kann in manchen Ausführungsbeispielen ferner Information über einen Auslöser der Information über die Gefährdung, Information über eine Schwere der Gefährdung und/oder Information über einen Zeitpunkt und/oder Zeitspanne der Gefährdung oder eines Auslösers der Gefährdung, etwa des Auslösens des aktiven Sicherheitssystems, umfassen.

In zumindest manchen Ausführungsbeispielen kann das Bestimmen 130b ferner ein Validieren der Information über die Gefährdung basierend auf der Information über die Geschwindigkeit des Fahrzeugs 100b umfassen. Das Kontrollmodul 14b kann ausgebildet sein, die Information über die Gefährdung basierend auf der Information über die Geschwindigkeit des Fahrzeugs zu validieren oder plausibilisieren. Beispielsweise kann das Kontrollmodul 14b ausgebildet sein, um die Information über die Gefährdung nur zu bestimmen, wenn die Information über die Geschwindigkeit des Fahrzeugs 100b ein starkes Abbremsen des Fahrzeugs 100b anzeigt.

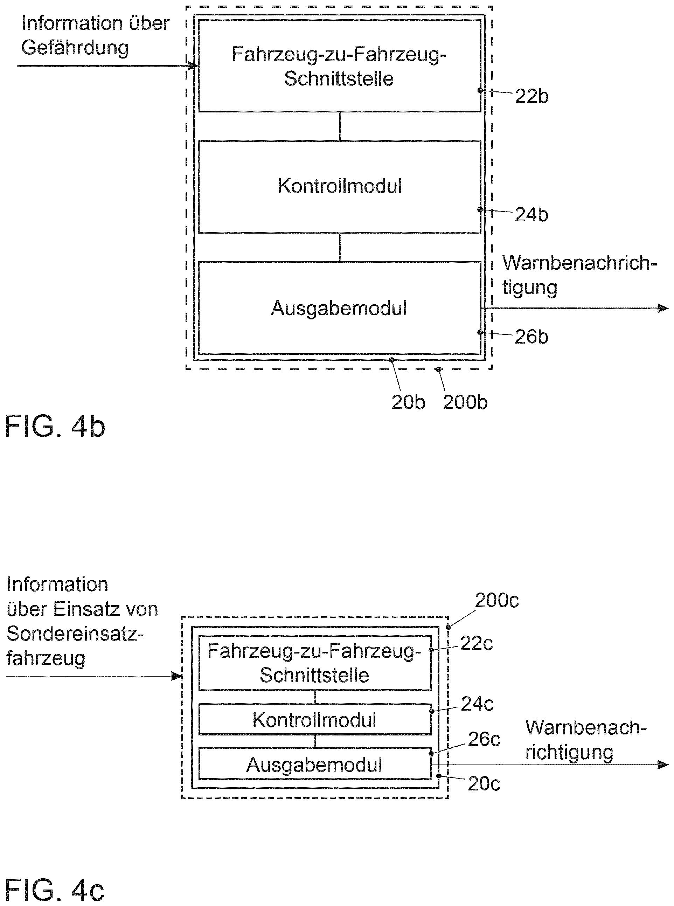

Fig. 2b zeigt ferner die Vorrichtung 10b umfassend ein Kontrollmodul 14b, das ausgebildet ist, um den Verfahrensschritt Bestimmen 130b auszuführen. In Ausführungsbeispielen kann das Kontrollmodul 14b, und/oder ein Kontrollmodul 24b aus Fig. 4b, einem beliebigen Controller oder Prozessor oder einer programmierbaren Hardwarekomponente entsprechen. Beispielsweise kann das Kontrollmodul 14b; 24b auch als Software realisiert sein, die für eine entsprechende Hardwarekomponente programmiert ist. Insofern kann das Kontrollmodul 14b; 24b als programmierbare Hardware mit entsprechend angepasster Software implementiert sein.

Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 14b; 24b denkbar.

Das Verfahren umfasst ferner Bereitstellen 140b der Information über die Gefährdung über eine Fahrzeug-zu-Fahrzeug-Schnittstelle. Das Kontrollmodul 14b aus Fig. 2b ist beispielsweise ausgebildet zum Bereitstellen 140b über eine Fahrzeug-zu-Fahrzeug-Schnittstelle 16b. Das Kontrollmodul 14b ist mit der zumindest einen Schnittstelle 12b und der Fahrzeug-zu-Fahrzeug-Schnittstelle 16b gekoppelt.

Eine Fahrzeug-zu-Fahrzeug-Kommunikation über die Fahrzeug-zu-Fahrzeug-Schnittstelle, etwa die Fahrzeug-zu-Fahrzeug-Schnittstelle 16b oder eine Fahrzeug-zu-Fahrzeug-Schnittstelle 22b aus Fig. 4b, kann beispielsweise über einen geteilten Kommunikationskanal stattfinden (auch engl. shared channel, broadcast channel), und die Fahrzeug-zu-Fahrzeug-Schnittstelle 16b; 22b kann ausgebildet sein, die Information über die Gefährdung als Nachricht an mehrere Empfänger (auch engl. Broadcast) über die Fahrzeug-zu-Fahrzeug-Kommunikationsverbindung bereitzustellen. In einigen Ausführungsbeispielen kann die Fahrzeug-zu-Fahrzeug-Kommunikationsverbindung einer direkten drahtlosen Kommunikationsverbindung zwischen zwei Fahrzeugen, beispielsweise ohne den Einsatz einer Basisstation, entsprechen, etwa gemäß IEEE 802.11p (einem Standard des Institute of Electrical and Electronics Engineers, Institut für Elektroingenieure). Die Fahrzeug-zu-Fahrzeug-Schnittstelle 16b; 22b kann beispielsweise ausgebildet sein, drahtlos direkt mit weiteren Fahrzeugen in einer Umgebung zu kommunizieren. In manchen Ausführungsbeispielen kann das Bereitstellen 140b beispielsweise ein Bereitstellen einer Decentralized Environmental Notification Message, DENM, umfassen.

In zumindest manchen Ausführungsbeispielen kann das Bereitstellen 140b etwa durchgeführt werden, wenn die Information über das Auslösen des zumindest einen aktiven Sicherheitssystems ein Auslösen des Sicherheitssystems anzeigt. Ferner kann in einigen Ausführungsbeispielen das Bereitstellen 140b oder das Bestimmen 130b darauf basieren, dadurch validiert werden oder dadurch ausgelöst werden, dass die Information über die Geschwindigkeit des Fahrzeugs 100b ein starkes Abbremsen des Fahrzeugs 100b anzeigt.

In manchen Ausführungsbeispielen kann die Information über die Gefährdung Information über das ausgelöste Sicherheitssystem umfassen. Dabei kann beispielsweise eine Priorisierung der aktiven Sicherheitssysteme beispielsweise den autonomer Bremseingriff über das Reversible Insassen-Rückhaltesystem und das Notbremsblinken stellen.

Liegt ein anderer Anwendungsfall mit einer höheren Priorisierung vor, so kann das Bereitstellen 140b der Information über die Gefährdung beispielsweise abgebrochen werden, etwa um Information über einen Unfall bereitzustellen. Ferner kann die Information über die Gefährdung verworfen werden, wenn sie nicht mehr gültig ist. Solange die Auslösekriterien erfüllt sind, kann periodisch, etwa alle 100ms, die Information über die Gefährdung erneut bereitgestellt 140 werden, beispielsweise in einer aktualisierten Fassung.

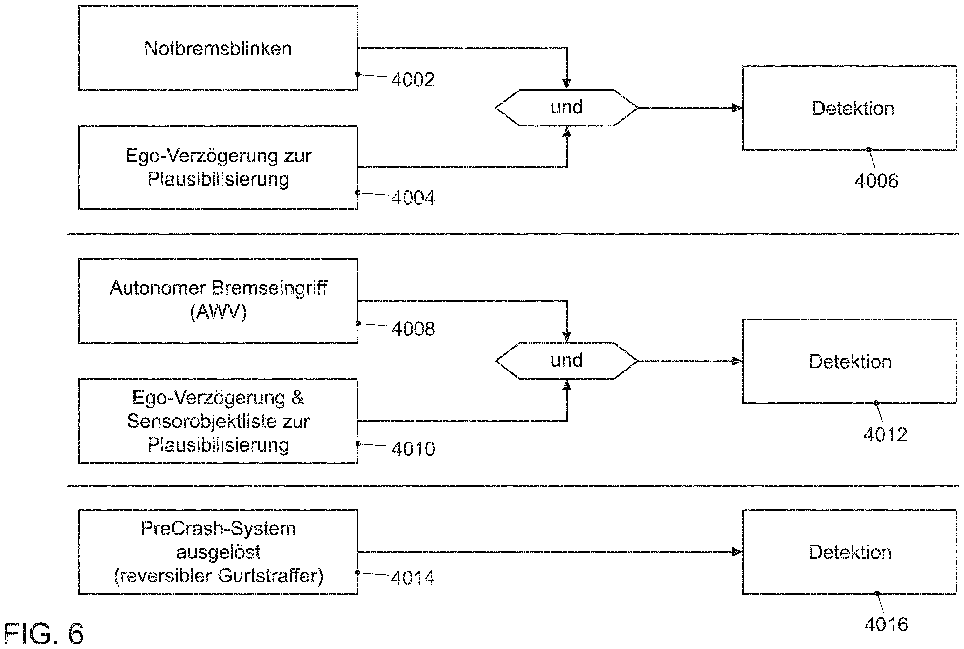

Fig. 6 zeigt ein beispielhaftes Ausführungsbeispiel, in dem folgende Bedingungen für das Bereitstellen 140b der Information über die Gefährdung, etwa als DENM, erfüllt sein können. Beispielsweise kann Information über ein Auslösen eines Notbremsblinkens 4002, Information über eine Intervention eines Sicherheitssystems zum autonomen Bremseingriff 4008 oder Information über ein Auslösen eines reversiblen Insassen-Rückhaltesystems 4014 als Information über das Auslösen des zumindest einen aktiven Sicherheitssystems erhalten 110b werden.

Die Information über das Auslösen des zumindest einen aktiven Sicherheitssystems kann beispielsweise im Bestimmen 130b anhand von Fahrparametern validiert werden. Beispielsweise kann die Information über die Gefährdung basierend auf einer, beispielsweise negativen, Beschleunigung des Fahrzeugs validiert oder plausibilisiert werden 4004; 4010. Dies kann geschehen, um die Information über das Auslösen des zumindest einen aktiven Sicherheitssystems, die etwa über den CAN-Bus empfangen wurde, darauf zu überprüfen, ob eine Gefährdungssituation vorliegt oder eine Fehlinformation. Dies kann beispielsweise verzögert geschehen. Beispielsweise kann das Bestimmen 130b und/oder das Bereitstellen 140b darauf basieren, dass die Beschleunigung geringer als -4 m/s² ist, was einem harten Bremsmanöver entsprechen kann. In manchen Ausführungsbeispielen, etwa wenn die Information über das Auslösen des reversiblen Insassen-Rückhaltesystems erhalten 110b wird, so kann in manchen Ausführungsbeispielen auf eine Validierung durch Fahrdaten verzichtet werde

Sind die Bedingungen erfüllt, so kann eine mögliche Gefährdung detektiert werden 4006; 4012; 4016 und die Information über die Gefährdung bestimmt 130b werden und/oder bereitgestellt werden 140b. Das Bereitstellen 140b der Information über die Gefährdung kann in einer beispielhaften Implementierung innerhalb von 100ms nach Bestimmen 130b der Information über die Gefährdung geschehen.

Mehr Details und Aspekte des Verfahrens und der Vorrichtung werden in Verbindung mit dem Konzept oder Beispielen genannt, die vorher (z.B. Fig. 1a - 2a) beschrieben wurden. Das Verfahren und/oder die Vorrichtung kann/können ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

In konventionellen Systemen zur Warnung vor Gefährdungen auf Straßen werden meist Verkehrsflussdaten in zentralen Rechenzentren (Backend-Systemen) verarbeitet und genutzt, um zu erkennen, welche Verkehrssituation vorliegt und ob eine Gefährdung bestehen könnte. Durch die Verarbeitung im Backend resultieren teilweise erhöhte Latenzzeiten und eine höhere Ungenauigkeit, da der Zustand eines Fahrzeuges häufig nicht einbezogen wird. In konventionellen Systemen sind meist lediglich frühzeitige Informationen ohne definierten Ort und genauere Hinweise möglich.

Ausführungsbeispiele der lokalen Gefahrenwarnung basieren auf einem Sender und Empfänger-Prinzip. Der Sender (vordere Fahrzeug) sendet eine gefährliche Situation und der Empfänger (hinteres Fahrzeug) kann diese Information empfangen und verarbeiten. Zumindest manche Ausführungsbeispiele betreffen ein Bereitstellen einer Information über einen Einsatz eines Sondereinsatzfahrzeugs durch das vordere Fahrzeug basierend auf Auslösekriterien, was ermöglicht, dass sich Einsatzfahrzeuge zu den entsprechenden Funktionsausprägungen gleich oder zumindest ähnlich verhalten.

Beim Einsatz von Sondereinsatzfahrzeugen, etwa der Polizei, von Krankenwägen oder Abschleppwägen kann beispielsweise zwischen drei Kategorien von Einsätzen unterschieden werden:
▪ Warnung vor einem Notfallfahrzeug im Einsatz (auch engl. Emergency Vehicle Warning), etwa bei Fahrzeugen mit Wegerecht wie Polizei und Krankenwagen
▪ Warnung vor einem stationären Sicherungsfahrzeug (auch engl. Stationary Safeguarding Emergency Vehicle Warning), meist Polizei
▪ Warnung vor einem stationären Abschlepp- oder Pannenfahrzeug (auch engl. Stationary Wrecking Service Warning)

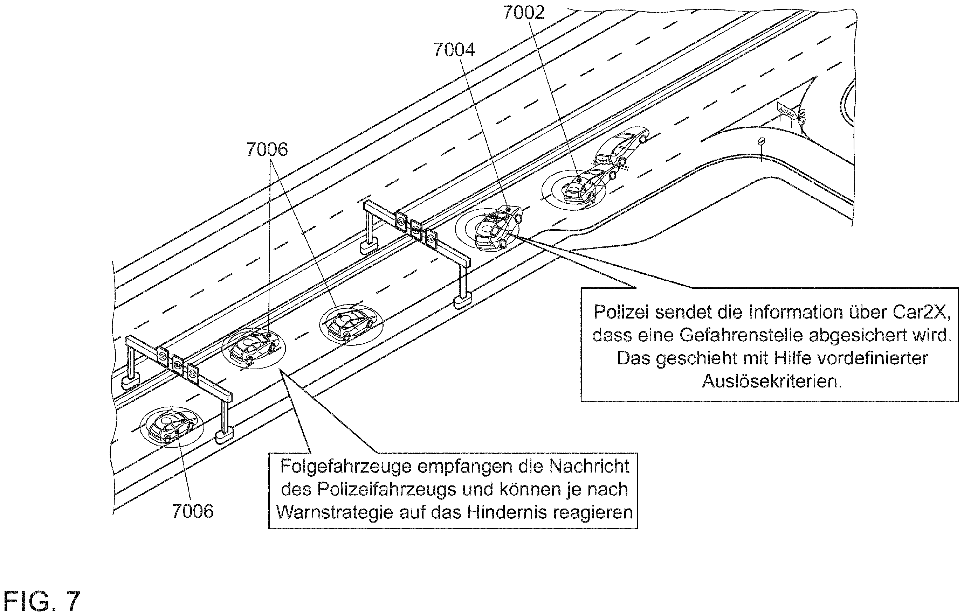

Fig. 7 zeigt ein Ausführungsbeispiel gemäß der beanspruchten Erfindung. Am Ort eines Unfalls 7002 sichert ein Sondereinsatzfahrzeug 7004 der Polizei die Unfallstelle, und sendet über eine Fahrzeug-zu-Fahrzeug-Schnittstelle (etwa eine Car2X-Schnittstelle) Information über einen Einsatz des Sondereinsatzfahrzeugs, etwa zur Sicherung der Gefahrenstelle, an Fahrzeuge in der Umgebung des Sondereinsatzfahrzeug 7004, etwa nachfolgende Fahrzeuge 7006. Dies geschieht mit Hilfe vordefinierter Auslösekriterien. Die Folgefahrzeuge 7006 empfangen die Nachricht des Polizeifahrzeugs und können je nach Warnstrategie auf das Hindernis reagieren. Fig. 1c zeigt ein Flussdiagramm eines Ausführungsbeispiels des Verfahrens für ein Fahrzeug 100c. Das Verfahren kann ähnlich implementiert sein wie zumindest eines der Verfahren, die in den Fig. 1a und 1b eingeführt werden. Das Fahrzeug 100c (das etwa dem Fahrzeug 100 aus Fig. 1a entsprechen kann) entspricht in zumindest manchen Ausführungsbeispielen einem Sondereinsatzfahrzeug. Die Information über das Auslösen von ein oder mehreren Funktionen des Fahrzeugs umfasst ein oder mehrere Indikatoren über einen Einsatz des Fahrzeugs 100c als Sondereinsatzfahrzeug. Ein Bestimmen 130c der Gefahrensituation bestimmt Information über einen Einsatz des Fahrzeugs als Sondereinsatzfahrzeug so, dass die Information über den Einsatz des Sondereinsatzfahrzeugs anzeigt, dass das Fahrzeug 100c als Sondereinsatzfahrzeug eine Gefahrenstelle sichert wenn die ein oder mehreren Indikatoren über den Einsatz des Fahrzeugs als Sondereinsatzfahrzeug ein Auslösen einer Rundumkennleuchte des Fahrzeugs 100c anzeigen, wenn Information über einen Fahrzustand des Fahrzeugs 100c anzeigt, dass das Fahrzeug 100c steht, und wenn die aktuelle Aktivität des Fahrers einem Sichern einer Unfallstelle entspricht. Erfindungsgemäß entspricht die aktuelle Aktivität des Fahrers einem Sichern einer Unfallstelle, wenn eine Tür des Fahrzeugs (Sondereinsatzfahrzeugs) 100c geöffnet ist oder eine Ladeklappe des Fahrzeugs 100c geöffnet ist.

Beispielsweise kann die aktuelle Aktivität des Fahrers des Fahrzeugs (oder des Fahrzeugs selbst) zumindest einem Element der Gruppe von Fahren des Fahrzeugs als Sondereinsatzfahrzeug in einem Einsatz, einem Sichern einer Gefahrenstelle, und Einsetzen des Fahrzeugs als Abschlepp- oder Pannenfahrzeug entsprechen. Beispielsweise kann die aktuelle Aktivität des Fahrers einer Aktivität entsprechen, die dem (durch Bestimmen 130c der Information über den Einsatz des Sondereinsatzfahrzeugs bestimmten) Einsatz des Sondereinsatzfahrzeugs entspricht.

Das Fahrzeug (Sondereinsatzfahrzeug) 100c kann beispielsweise einem Einsatzfahrzeug der Polizei, einem Einsatzfahrzeug der Feuerwehr, einem Einsatzfahrzeug der Straßenwacht, einem Krankenwagen, einem Abschlepp- oder Pannenfahrzeug, einem Bergungsfahrzeug oder einem Fahrzeug zur Unfallsicherung entsprechen. Fig. 3c illustriert ein Blockdiagramm eines Ausführungsbeispiels einer Vorrichtung 10c für das Fahrzeug 100c, ausgebildet zum Ausführen des Verfahrens. Ausführungsbeispiele schaffen ferner das Fahrzeug 100c umfassend die Vorrichtung 10c.

Das Verfahren umfasst Erhalten 110c von ein oder mehreren Indikatoren über einen Einsatz des Fahrzeugs 100c. Die Vorrichtung 10c umfasst zumindest eine Schnittstelle 12c, die ausgebildet ist zum Erhalten 110c. Die zumindest eine Schnittstelle 12c kann beispielsweise einem oder mehreren Eingängen und/oder einem oder mehreren Ausgängen zum Empfangen und/oder Übertragen von Informationen entsprechen, etwa in digitalen Bitwerten, basierend auf einem Code, innerhalb eines Moduls, zwischen Modulen, oder zwischen Modulen verschiedener Entitäten. Beispielsweise kann das Erhalten 110c ein Erhalten von Nachrichten auf einem Fahrzeug-Kommunikationsbus, beispielsweise auf einem Steuergeräte-Netzwerkbus (auch engl. Controller Area Network Bus, CAN Bus) oder auf einem lokalen Verbindungsnetzwerk (auch engl. Local Interconnect Network, LIN) umfassen. Beispielsweise kann das Erhalten 110c ein Auslesen oder Überwachen von Datenpaketen umfassen, beispielsweise eingeschränkt durch einen Sender- oder Kopfdaten-basierten Filter. Die zumindest eine Schnittstelle 12c kann beispielsweise ausgebildet sein, um Daten über einen CAN-Bus oder ein LIN zu erhalten.

Die ein oder mehreren Indikatoren können zumindest ein Element der Gruppe von Sirene des Fahrzeugs 100c ist aktiv/inaktiv, Rundumkennleuchte des Fahrzeugs 100c ist aktiv/inaktiv, Warnblinkeinheit des Fahrzeugs 100c ist aktiv/inaktiv, Standbremsfunktionalität des Fahrzeugs 100 ist aktiv/inaktiv, Informationstafel des Fahrzeugs 100c ist aktiv/inaktiv, Tür ist offen/geschlossen, Ladeklappe ist offen/geschlossen, und Fahrersitz ist besetzt/nicht besetzt anzeigen.

In manchen Ausführungsbeispielen, gezeigt in Fig. 1a, umfasst das Verfahren ferner Erhalten 120c von Information über einen Fahrzustand des Fahrzeugs 100c. Der Fahrzustand zeigt an, ob das Fahrzeug 100c fährt oder steht. Der Fahrzustand kann beispielsweise ferner anzeigen, ob eine Zündung des Fahrzeugs und/oder ein geschaltetes Plus vom Zündstartschalter (Klemme 15) aktiviert ist. In manchen Ausführungsbeispielen kann die Information über den Fahrzustand über den CAN-Bus erhalten 120c werden, und nicht auf einem satellitengestützten Positionierungsdienst basieren.

Das Verfahren umfasst ferner Bestimmen 130c einer Information über einen Einsatz des Fahrzeugs 100c basierend auf den ein oder mehreren Indikatoren über den Einsatz des Fahrzeugs 100c. Das Bestimmen 130c kann beispielsweise ein Auswerten, ob ein Einsatz des Fahrzeugs vorliegt, umfassen. Das Bestimmen 130c kann beispielsweise eine Vergleichen der Indikatoren mit einer Entscheidungsstruktur oder einem Entscheidungskatalog umfassen, die/der anzeigt, unter welchen Umständen/Indikatoren ein Einsatz/welche Einsatzart gegeben ist. Der Einsatz des Fahrzeugs (und/oder die aktuelle Aktivität des Fahrers) kann beispielsweise einer Einsatzfahrt des Fahrzeugs, etwa einer Polizeieinsatzfahrt, Krankenwageneinsatzfahrt, Feuerwehreinsatzfahrt, Bergungsdiensteinsatzfahrt oder Pannen/Abschleppfahrt, einer Sicherung einer Unfallstelle, einer Verkehrssicherung oder einer Bergung/einem Abschleppen eines Fahrzeugs entsprechen.

Die Vorrichtung 10c umfasst ein Kontrollmodul 14c, ausgebildet zum Bestimmen 130c. In Ausführungsbeispielen kann das Kontrollmodul 14c, und/oder ein Kontrollmodul 24c aus Fig. 4c, einem beliebigen Controller oder Prozessor oder einer programmierbaren Hardwarekomponente entsprechen. Beispielsweise kann das Kontrollmodul 14c; 24c auch als Software realisiert sein, die für eine entsprechende Hardwarekomponente programmiert ist. Insofern kann das Kontrollmodul 14c; 24c als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 14c; 24c denkbar.

Sondereinsatzfahrzeuge sind Fahrzeuge, die dafür ausgewählt und berechtigt sind, in einer Notfallsituation eingesetzt zu werden. Sie werden häufig von Organisationen, etwa als Teil der öffentlichen Verwaltung, betrieben, aber können auch von gemeinnützigen Organisationen und kommerziellen Anbietern bettrieben werden. Sondereinsatzfahrzeuge haben häufig die Erlaubnis, für normale Fahrzeuge geltende Straßenverkehrsregeln temporär zu brechen, um ihr Ziel möglichst schnell zu erreichen, beispielsweise durch Überqueren einer Kreuzung trotz roter Ampel oder durch Überschreiten einer Geschwindigkeitsbegrenzung.

Für ein Bestimmen von Information über einen Einsatz eines Sondereinsatzfahrzeugs als Warnung vor einem Notfallfahrzeug (oder Fahrzeug 100c) im Einsatz ist in zumindest einigen Ausführungsbeispielen Voraussetzung, dass eine Zündung des Fahrzeugs aktiv ist (Klemme 15 ist aktiviert) und es sich bei dem Fahrzeug um ein Sondereinsatzfahrzeug handelt.

In zumindest einigen Ausführungsbeispielen kann sich das Fahrzeug 100c als Sondereinsatzfahrzeug in einem Einsatz befinden, beispielsweise auf dem Weg zu einer Einsatzstelle. Das Bestimmen 130c kann in diesem Fall die Information über den Einsatz des Sondereinsatzfahrzeugs 100c so bestimmen, dass die Information über den Einsatz des Fahrzeugs 100c anzeigt, dass das Fahrzeug 100c fährt und sich in einem Einsatz befindet. Voraussetzung dafür ist beispielsweise, dass die ein oder mehreren Indikatoren anzeigen, dass eine Sirene des Fahrzeugs 100c aktiviert ist. Weitere Voraussetzung kann sein, dass eine Rundumkennleuchte des Fahrzeugs 100c aktiviert ist. Weitere Voraussetzung kann sein, dass die Information über den Fahrzustand anzeigt, dass das Fahrzeug 100c fährt. Sind die Voraussetzungen erfüllt, so kann das Bestimmen 130c durchgeführt werden und ein Bereitstellen 140c durchgeführt werden.

Die Sirene kann beispielsweise einem akustischen Warnmodul entsprechen, das beispielsweise ausgebildet ist, akustische Warnsignale oder akustische Warnnachrichten einer Öffentlichkeit bereitzustellen. Die Sirene kann beispielsweise einem Martinshorn entsprechen. Die Rundumkennleuchte kann beispielsweise einem optischen Signalgeber, beispielsweise ein oder mehreren Signalleuchten entsprechen, die in manchen Ausführungsbeispielen ausgebildet sind, um Licht in einem vordefinierten Nutzer bereitstellen, um eine Warnfunktion zu erfüllen.

In zumindest manchen Ausführungsbeispielen, sichert das Fahrzeug eine stationäre Gefahrenstelle, etwa bei einem Unfall oder einem Feuer. Das Bestimmen 130c kann in diesem Fall die Information über den Einsatz des Fahrzeugs 100c so bestimmen, dass die Information über den Einsatz des Fahrzeugs 100c anzeigt, dass das Fahrzeug 100c eine Gefahrenstelle sichert. Voraussetzung dafür kann sein, dass die Information über den Fahrzustand anzeigt, dass das Fahrzeug 100c steht. Eine weitere Voraussetzung kann sein, dass die ein oder mehreren Indikatoren anzeigen, dass die Rundumkennleuchte des Fahrzeugs 100c aktiviert ist. Eine weitere Voraussetzung kann sein, dass die Information über den Fahrzustand ferner anzeigt, dass eine Zündung des Fahrzeugs 100c aktiviert ist, oder dass die ein oder mehreren Indikatoren anzeigen, dass eine Warnblinkeinheit des Fahrzeugs 100c aktiviert ist und eine Standbremsfunktionalität des Fahrzeugs 100c aktiviert ist. Alternativ oder zusätzlich können die ein oder mehreren Indikatoren anzeigen, dass eine Warnblinkeinheit des Fahrzeugs 100c aktiviert ist und ein Zeitmesser anzeigt, dass das Fahrzeug 100c länger als ein erster Zeitschwellenwert steht.

Der erste Zeitschwellenwert kann beispielsweise 15s, 30s, 45s, 60s, 90s, 120s, 240s, 300s oder 360s betragen. Die Vorrichtung 10c kann beispielsweise den Zeitmesser umfassen, etwa implementiert durch das Kontrollmodul 14c, oder in einem Zeitmessermodul. In manchen Ausführungsbeispielen kann es ausgeschlossen sein, dass das Bestimmen die Information über den Einsatz gleichzeitig so bestimmt, dass das Sondereinsatzfahrzeug sich in einem Einsatz befindet und fährt und dass es eine Unfallstelle sichert.

Erfindungsgemäß bestimmt das Bestimmen 130c die Information über den Einsatz des Fahrzeugs 100c so, dass die Information über den Einsatz des Fahrzeugs 100c anzeigt, dass das Fahrzeug 100c eine Gefahrenstelle sichert. Voraussetzung dafür ist, dass die ein oder mehreren Indikatoren ferner anzeigen, dass eine Tür des Fahrzeugs 100c geöffnet ist, oder dass eine Ladeklappe des Fahrzeugs 100c geöffnet ist. Dazu kann das Kontrollmodul 14c ausgebildet sein, um Kameradaten auszuwerten oder die Information über die Indikatoren können Information über eine Gurtprüfung umfassen. Sind die Voraussetzungen erfüllt, so kann das Bestimmen 130c durchgeführt werden und ein Bereitstellen 140c durchgeführt werden.

In einigen Ausführungsbeispielen kann das Fahrzeug 100c einem Abschlepp- oder Pannenfahrzeug entsprechen, das (oder dessen Fahrer) beispielsweise Pannenhilfe leistet oder eine Bergung eines weiteren Fahrzeugs durchführt. Das Bestimmen 130c kann die Information über den Einsatz des Sondereinsatzfahrzeugs 100c so bestimmen, dass die Information über den Einsatz des Sondereinsatzfahrzeugs 100c anzeigt, dass das Sondereinsatzfahrzeug 100c einem stationären Abschlepp- oder Pannenfahrzeug entspricht. Voraussetzung dafür kann sein, dass die Information über den Fahrzustand anzeigt, dass das Fahrzeug 100c steht. Weitere Voraussetzung kann sein, dass die ein oder mehreren Indikatoren anzeigen, dass eine Rundumkennleuchte des Fahrzeugs 100c aktiviert ist und/oder dass eine Warnblinkeinheit des Fahrzeugs 100c aktiviert ist. Weitere Voraussetzung kann sein, dass die ein oder mehreren Indikatoren anzeigen, dass eine Standbremsfunktionalität des Fahrzeugs 100c aktiviert ist, etwa dass eine Handbremse gezogen ist oder eine Park-Position eines Automatikgetriebes aktiviert ist. Ferner kann eine Voraussetzung sein, dass der Zeitmesser anzeigt, dass das Fahrzeug 100c länger als ein erster Zeitschwellenwert steht. Der Zeitmesser kann beispielsweise gestartet werden, wenn die Rundumkennleuchte aktiviert ist und Fahrzeug 100c steht. Ist sie nicht mehr aktiv, so kann der Zeitmesser zurückgesetzt werden. Auch kann der Zeitmesser zurückgesetzt werden, wenn das Fahrzeug 100c fährt. Sind die Voraussetzungen erfüllt, so kann das Bestimmen 130c durchgeführt werden und ein Bereitstellen 140c durchgeführt werden.

Das Verfahren umfasst ferner Bereitstellen 140c der Information über den Einsatz des Fahrzeugs 100c über eine Fahrzeug-zu-Fahrzeug-Schnittstelle. Das Kontrollmodul 14c ist ferner ausgebildet zum Bereitstellen 140c. Die Vorrichtung umfasst ferner die Fahrzeug-zu-Fahrzeug-Schnittstelle 16c, die der Fahrzeug-zu-Fahrzeug-Schnittstelle des Verfahrensschritts 140 entsprechen kann. Das Kontrollmodul 14c ist mit der zumindest einen Schnittstelle 12c und der Fahrzeug-zu-Fahrzeug-Schnittstelle 16c gekoppelt. In zumindest manchen Ausführungsbeispielen kann das Bestimmen 130c einem Auslösen des Bereitstellens 140c entsprechen, basierend auf den ein oder mehreren Indikatoren. Sind diese erfüllt, so kann die Information über den Einsatz bestimmt 130c und/oder bereitgestellt 140c werden.

Eine Fahrzeug-zu-Fahrzeug-Kommunikation über die Fahrzeug-zu-Fahrzeug-Schnittstelle, etwa die Fahrzeug-zu-Fahrzeug-Schnittstelle 16c oder eine Fahrzeug-zu-Fahrzeug-Schnittstelle 22c aus Fig. 4c, kann beispielsweise über einen geteilten Kommunikationskanal stattfinden (auch engl. shared channel, broadcast channel), und die Fahrzeug-zu-Fahrzeug-Schnittstelle 16c; 22c kann ausgebildet sein, die Information über die Gefährdung als Nachricht an mehrere Empfänger (auch engl. Broadcast) über die Fahrzeug-zu-Fahrzeug-Kommunikationsverbindung bereitzustellen. In einigen Ausführungsbeispielen kann die Fahrzeug-zu-Fahrzeug-Kommunikationsverbindung einer direkten drahtlosen Kommunikationsverbindung zwischen zwei Fahrzeugen, beispielsweise ohne den Einsatz einer Basisstation, entsprechen, etwa gemäß IEEE 802.11p (einem Standard des Institute of Electrical and Electronics Engineers, Institut für Elektroingenieure). Die Fahrzeug-zu-Fahrzeug-Schnittstelle 16c; 22c kann beispielsweise ausgebildet sein, drahtlos direkt mit weiteren Fahrzeugen in einer Umgebung zu kommunizieren. In manchen Ausführungsbeispielen kann das Bereitstellen 140c beispielsweise ein Bereitstellen Ereignisbasierten Nachricht, beispielsweise einer Decentralized Environmental Notification Message (DENM) umfassen. Das Bereitstellen 140 kann beispielsweise einem direkten Bereitstellen für Fahrzeuge in einer Umgebung der Fahrzeug-zu-Fahrzeug-Schnittstelle entspricht, etwa über eine direkte Funkschnittstelle, ohne den Einsatz einer Basisstation. Alternativ oder zusätzlich kann das Bereitstellen 140c ferner ein Bereitstellen einer sog. Periodischen Statusnachricht, etwa einer Cooperative Awareness Message, CAM, umfassen. Das Bereitstellen 140c der Information über den Einsatz des Fahrzeugs kann beispielsweise einem setzen von ein oder mehreren Bitwerten gemäß einem Codeschema in einer Datennachricht gemäß eines Nachrichtenprotokolls, etwa zur Fahrzeug-zu-Fahrzeug-Kommunikation, entsprechen.

In zumindest manchen Ausführungsbeispielen kann die Information über den Einsatz des Fahrzeugs ferner Information über die ein oder mehreren Indikatoren umfassen, etwa Information darüber, welcher Bedingungen durch die Indikatoren (nicht) erfüllt sind. Dies kann beispielsweise durch eine Bit/Werte-basierte Codierung erfolgen.

In zumindest manchen Ausführungsbeispielen kann das Bereitstellen 140c periodisch ausgeführt werden, etwa all 50ms, 100ms, 150ms, 200ms, 250ms, 500ms, 1s, 2s, 5s, 10s, etwa im Fall, wenn sich die Information über den Fahrzustand oder die ein oder mehreren Indikatoren ändern. Das Bereitstellen 140c kann beispielsweise so lange fortgeführt werden, bis Voraussetzungen durch die Information über den Fahrzustand und/oder die ein oder mehreren Indikatoren nicht mehr erfüllt werden.

In zumindest manchen Ausführungsbeispielen kann das Bestimmen 130c ferner ein Bestimmen einer Position und/oder Trajektorie des Fahrzeugs umfassen. Die Information über den Einsatz des Fahrzeugs 100c kann ferner Information über die Position und/oder Information über die Trajektorie des Fahrzeugs 100c umfassen. Die Information über die Position/Trajektorie kann beispielsweise auf Positionspunkten und/oder Bewegungsvektoren basieren. Beispielsweise kann die Positionierung für die Information über die Gefährdung auf einem satellitengestützten Positionierungssystem, etwa dem Globalen Positionierungs-System (GPS) basieren.

In zumindest manchen Ausführungsbeispielen kann die Information über den Einsatz des Fahrzeug ferner Information über zumindest ein Element der Gruppe von Zeitstempel für einen Auslöser, aktuelle Zeitstempel, eine Position, Radius über eine Relevanz der Information über den Einsatzes, Information über eine Verkehrsrichtung, in der die Information über den Einsatz relevant ist, Information über eine Dauer eine Validität der Information über den Einsatz (etwa 0.5s, 1s, 2s, 5s), Geschwindigkeit des Fahrzeug, Straßenart einer Straße, auf der sich das Fahrzeug 100c befindet, Spur der Straße, auf der sich das Sondereinsatzfahrzeug 100c befindet, Typ des Sondereinsatzfahrzeugs und Dauer eines stationären Zustandes des Sondereinsatzfahrzeug 100c.

Mehr Details und Aspekte des Verfahrens und der Vorrichtung werden in Verbindung mit dem Konzept oder Beispielen genannt, die vorher (z.B. Fig. 1a - 2b) beschrieben wurden. Das Verfahren und/oder die Vorrichtung kann/können ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

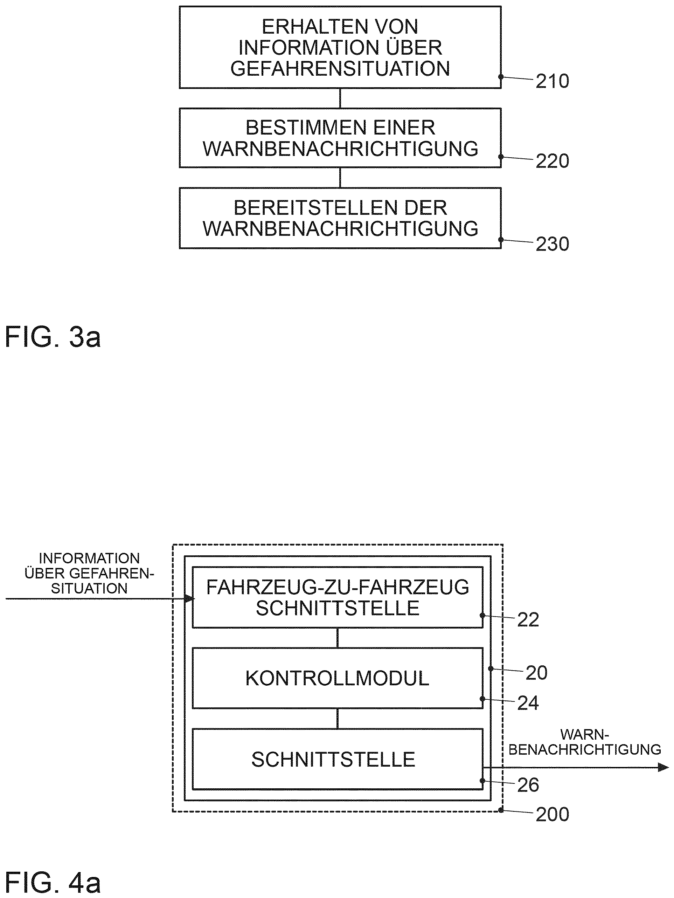

Fig. 3a zeigt ein Flussdiagramm eines Verfahrens für ein Fahrzeug 200. Fig. 4a zeigt ein Blockdiagramm eines Ausführungsbeispiels einer entsprechenden Vorrichtung 20 mit einer Fahrzeug-zu-Fahrzeug-Schnittstelle 22, einem Kontrollmodul 24 und einem Ausgebemodul 26 für das Fahrzeug 200. Die Fahrzeug-zu-Fahrzeug-Schnittstelle 22, das Kontrollmodul 24 und/oder das Ausgabemodul 26 können ähnlich implementiert sein wie eine Fahrzeug-zu-Fahrzeug-Schnittstelle 22b/c, ein Kontrollmodul 24b/c und ein Ausgebemodul 26b/c, wie sie in Zusammenhang mit Fig. 4b und/oder 4c eingeführt werden. In zumindest manchen Ausführungsbeispielen könnte das Fahrzeug beispielsweise einem Landfahrzeug, einem Wasserfahrzeug, einem Luftfahrzeug, einem Schienenfahrzeug, einem Straßenfahrzeug, einem Auto, einem Geländefahrzeug, einem Kraftfahrzeug, oder einem Lastkraftfahrzeug entsprechen. In manchen Ausführungsbeispielen kann das Fahrzeug 100 ferner dem Fahrzeug 200 entsprechen, d.h. ein Fahrzeug könnte ausgebildet sein, das Verfahren zumindest einer der Figuren. 1a-c und zumindest einer der Figuren 3a-c auszuführen. Ein Fahrzeug könnte ferner die Vorrichtung 10; 10b; 10c und eine Vorrichtung 20; 20b; 20c aus Fig. 4a-c umfassen.

Das Verfahren umfasst Erhalten 210 von Information über eine Gefahrensituation von einem weiteren Fahrzeug 100 über eine Fahrzeug-zu-Fahrzeug-Schnittstelle. Beispielsweise kann die Information über die Gefahrensituation Information über die Gefährdung und/oder Information über den Einsatz eines Sondereinsatzfahrzeugs umfassen, etwa wie sie in Zusammenhang mit den Figuren 1a-1c eingeführt werden. Die Information über die Gefahrensituation basiert auf Information über ein Auslösen von ein oder mehreren Funktionen des Fahrzeugs und auf einer Aktivität eines Fahrers des Fahrzeugs 100, etwa wie sie in Zusammenhang mit den Figuren 1a-1c eingeführt werden.

Das Verfahren umfasst ferner Bestimmen 220 einer Warnbenachrichtigung, basierend auf der Information über die Gefahrensituation. In zumindest einigen Ausführungsbeispielen kann die Warnbenachrichtigung Information über einen Ort, eine Distanz und/oder einen Auslöser der Gefahrensituation umfassen. Die Warnbenachrichtigung kann beispielsweise einer optischen, taktilen oder akustischen Warnung entsprechen. Das Verfahren umfasst ferner Bereitstellen 230 der Warnbenachrichtigung über ein Ausgabemodul.

Mehr Details und Aspekte des Verfahrens und der Vorrichtung werden in Verbindung mit dem Konzept oder Beispielen genannt, die vorher (z.B. Fig. 1a - 3a) beschrieben wurden. Das Verfahren und/oder die Vorrichtung kann/können ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

Fig. 3b illustriert ein Flussdiagramm eines Ausführungsbeispiels eines Verfahrens für ein Fahrzeug 200b. In zumindest manchen Ausführungsbeispielen könnte das Fahrzeug 200b beispielsweise einem Landfahrzeug, einem Wasserfahrzeug, einem Luftfahrzeug, einem Schienenfahrzeug, einem Straßenfahrzeug, einem Auto, einem Geländefahrzeug, einem Kraftfahrzeug, oder einem Lastkraftfahrzeug entsprechen. In manchen Ausführungsbeispielen kann das Fahrzeug 100b ferner dem Fahrzeug 200b entsprechen, d.h. ein Fahrzeug könnte ausgebildet sein, zumindest eines der Verfahren der Figuren. 1a-1c und 3a-3c auszuführen. Ein Fahrzeug könnte ferner die Vorrichtung 10b aus Fig. 2b und eine Vorrichtung 20b aus Fig. 4b umfassen.

Das Verfahren umfasst Erhalten 210b von Information über eine Gefährdung von einem weiteren Fahrzeug 100b über eine Fahrzeug-zu-Fahrzeug-Schnittstelle. Die Information über die Gefährdung basiert auf Information über ein Auslösen zumindest eines aktiven Sicherheitssystems. In zumindest manchen Ausführungsbeispielen basiert die Information über die Gefährdung ferner auf Information über eine Geschwindigkeit des weiteren Fahrzeugs 100b. Das weitere Fahrzeug 100b kann sich beispielsweise in einer Umgebung des Fahrzeugs 200b befinden.

Das Verfahren umfasst ferner Bestimmen 220b einer Warnbenachrichtigung, basierend auf der Information über die Gefährdung. In zumindest einigen Ausführungsbeispielen kann die Warnbenachrichtigung Information über einen Ort, eine Distanz und/oder einen Auslöser der Gefährdung umfassen. Die Warnbenachrichtigung kann beispielsweise einer optischen, taktilen oder akustischen Warnung entsprechen. Das Verfahren umfasst ferner Bereitstellen 230b der Warnbenachrichtigung über ein Ausgabemodul.

Fig. 4b illustriert ein Blockdiagramm eines Ausführungsbeispiels einer Vorrichtung 20b für das Fahrzeug 200b. Die Vorrichtung umfasst eine Fahrzeug-zu-Fahrzeug-Schnittstelle 22b, ausgebildet zum Ausführen des Verfahrensschritts 210b (Erhalten von Information über Gefährdung). Die Vorrichtung umfasst ferner ein Kontrollmodul 24b, ausgebildet zum Ausführen der Verfahrensschritte 220b und 230b (Bestimmen der Warnbenachrichtigung und Bereitstellen der Warnbenachrichtigung), sowie ein Ausgabemodul 26b zum Bereitstellen der Warnbenachrichtigung. Das Ausgabemodul 26b kann beispielsweise einem Bildschirm, einer Signalleuchte, einem Lautsprecher, einem Tongenerator oder einem taktilen Ausgabegerät, etwa zur Erzeugung von Vibrationen, entsprechen. Das Kontrollmodul 24b ist mit der Fahrzeug-zu-Fahrzeug-Schnittstelle 22b und dem Ausgabemodul 26b gekoppelt.

Mehr Details und Aspekte des weiteren Verfahrens und der Vorrichtung 20b werden in Verbindung mit dem Konzept oder Beispielen genannt, die vorher (z.B. Fig. 1 bis 4a) beschrieben wurden. Das weitere Verfahren und/oder die Vorrichtung 20b kann ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

Fig. 3c illustriert ein Flussdiagramm eines Ausführungsbeispiels eines Verfahrens für ein Fahrzeug 200c. Das Verfahren kann ähnlich implementiert sein wie zumindest eines der Verfahren, die in den Fig. 3a und/oder 3b eingeführt werden. In zumindest manchen Ausführungsbeispielen könnte das Fahrzeug 200c beispielsweise einem Landfahrzeug, einem Straßenfahrzeug, einem Auto, einem Geländefahrzeug, einem Kraftfahrzeug, oder einem Lastkraftfahrzeug entsprechen. Fig. 4c zeigt eine Vorrichtung 20c für das Fahrzeug, ausgebildet zum Ausführen des Verfahrens für das Fahrzeug. Ausführungsbeispiele schaffen ferner das Fahrzeug 200c umfassend die Vorrichtung 20c. Die Vorrichtung 20c kann ähnlich implementiert sein wie zumindest eine der Vorrichtungen, die in den Fig. 4a und/oder 4b eingeführt werden.

Das Verfahren umfasst Erhalten 210c der Information über den Einsatz des Sondereinsatzfahrzeugs 100c von dem Sondereinsatzfahrzeug 100c über eine Fahrzeug-zu-Fahrzeug-Schnittstelle. Die Information über den Einsatz des Sondereinsatzfahrzeugs 100c basiert auf den oder mehreren Indikatoren über einen Einsatz des Sondereinsatzfahrzeugs 100c. Die Vorrichtung 20c umfasst ferner die Fahrzeug-zu-Fahrzeug-Schnittstelle 22c, ausgebildet zum Erhalten 210 der Information über den Einsatz des Sondereinsatzfahrzeugs 100c.

Das Verfahren umfasst ferner Bestimmen 220c einer Warnbenachrichtigung, basierend auf der Information über den Einsatz des Sondereinsatzfahrzeugs 100c. In zumindest einigen Ausführungsbeispielen kann die Warnbenachrichtigung Information über einen Ort, eine Distanz und/oder einen Auslöser der Gefährdung umfassen. Die Warnbenachrichtigung kann beispielsweise einer optischen, taktilen oder akustischen Warnung entsprechen. Das Verfahren umfasst ferner Bereitstellen 230c der Warnbenachrichtigung über ein Ausgabemodul.

Die Vorrichtung 20c umfasst ferner das Kontrollmodul 24c, das ausgebildet ist zum Bestimmen 220c der Warnbenachrichtigung und zum Bereitstellen 230c der Warnbenachrichtigung. Die Vorrichtung umfasst ferner das Ausgabemodul 26c. Das Ausgabemodul 26c kann beispielsweise einem Bildschirm, einer Signalleuchte, einem Lautsprecher, einem Tongenerator oder einem taktilen Ausgabegerät, etwa zur Erzeugung von Vibrationen, entsprechen. Das Kontrollmodul 24c ist mit der Fahrzeug-zu-Fahrzeug-Schnittstelle 22c und dem Ausgabemodul 26c gekoppelt.

Mehr Details und Aspekte des weiteren Verfahrens und der Vorrichtung 20c werden in Verbindung mit dem Konzept oder Beispielen genannt, die vorher (z.B. Fig. 1 bis 4b) beschrieben wurden. Das weitere Verfahren und/oder die Vorrichtung 20c kann ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiele ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

10;10b;10c Vorrichtung
12; 12b; 12c Schnittstelle
14; 14b; 14c Kontrollmodul
16; 16b; 16c Fahrzeug-zu-Fahrzeug-Schnittstelle
20; 20b; 20c Vorrichtung
22; 22b; 22c Fahrzeug-zu-Fahrzeug-Schnittstelle
24; 24b; 24c Kontrollmodul
26; 26b; 26c Ausgabemodul
100; 100b; 100c Fahrzeug
110; 110b; 110c Erhalten
120; 120b; 120c Erhalten
130; 130b; 130c Bestimmen
140; 140b; 140c Bereitstellen
200; 200b; 200c Fahrzeug
210; 210b; 210c Erhalten
220; 220b; 220c Bestimmen
230; 230b; 230c Bereitstellen
2002 Gefährdungssituation
2004 Nachfolgendes Fahrzeug
2006 Weiteres nachfolgendes Fahrzeug
4002 Auslösen eines Notbremsblinkens
4004 Plausibilisierung
4006 Detektion
4008 Auslösen eines autonomen Bremseingriffs
4010 Plausibilisierung
4012 Detektion
4014 Auslösen eines PreCrash-Systems
4016 Detektion
7002 Unfall
7004 Sondereinsatzfahrzeug
7006 Folgefahrzeuge

## Patentansprüche

1. Verfahren für ein Fahrzeug (100; 100b; 100c), umfassend
Erhalten (110; 110b; 110c) von Information über ein Auslösen von ein oder mehreren Funktionen des Fahrzeugs (100; 100b; 100c);
Erhalten von Information über einen Fahrzustand des Fahrzeugs (100c), wobei der Fahrzustand anzeigt, ob das Fahrzeug (100c) fährt oder steht,
Bestimmen (120; 120b; 120c) einer Gefahrensituation, basierend auf den ein oder mehreren ausgelösten Funktionen des Fahrzeugs (100; 100b; 100c), basierend auf einer Information über einen Fahrzustand des Fahrzeugs, und abhängig von einer aktuellen Aktivität eines Fahrers des Fahrzeugs (100; 100b; 100c);
Bereitstellen (130; 130b; 130c) von Information über die Gefahrensituation über eine Fahrzeug-zu-Fahrzeug-Schnittstelle,
wobei die Information über das Auslösen von ein oder mehreren Funktionen des Fahrzeugs ein oder mehrere Indikatoren über einen Einsatz des Fahrzeugs (100c) als Sondereinsatzfahrzeug umfasst, wobei das Bestimmen (120c) der Gefahrensituation Information über einen Einsatz des Fahrzeugs als Sondereinsatzfahrzeug so bestimmt, dass die Information über den Einsatz des Sondereinsatzfahrzeugs anzeigt, dass das Fahrzeug (100c) als Sondereinsatzfahrzeug eine Gefahrenstelle sichert wenn die ein oder mehreren Indikatoren über den Einsatz des Fahrzeugs als Sondereinsatzfahrzeug ein Auslösen einer Rundumkennleuchte des Fahrzeugs (100c) anzeigen, wenn die Information über den Fahrzustand des Fahrzeugs (100c) anzeigt, dass das Fahrzeug (100c) steht, und wenn die aktuelle Aktivität des Fahrers einem Sichern einer Unfallstelle entspricht,
wobei festgestellt wird, dass die aktuelle Aktivität des Fahrers einem Sichern einer Unfallstelle entspricht, wenn eine Tür des Fahrzeugs (100c) geöffnet ist, oder eine Ladeklappe des Fahrzeugs (100c) geöffnet ist.

2. Das Verfahren gemäß Anspruch 1,
wobei das Bereitstellen (140; 140b; 140c) ein Bereitstellen einer Decentralized Environmental Notification Message, DENM, umfasst,
und/oder wobei die Fahrzeug-zu-Fahrzeug-Schnittstelle ausgebildet ist, gemäß Fahrzeug-zu-Fahrzeug-Kommunikationsstandard IEEE 802.11p zu kommunizieren,
und/oder wobei das Bereitstellen (140; 140b; 140c) einem direkten Bereitstellen für Fahrzeuge in einer Umgebung der Fahrzeug-zu-Fahrzeug-Schnittstelle entspricht.

3. Verfahren, umfassend
durch ein erstes Fahrzeug, Ausführen der Schritte des Verfahrens von einem der Ansprüche 1 oder 2, und
durch ein zweites Fahrzeug:
Erhalten (210; 210b; 210c) von Information über eine Gefahrensituation von dem ersten Fahrzeug (100; 100b; 100c) über eine Fahrzeug-zu-Fahrzeug-Schnittstelle, wobei die Information über die Gefahrensituation auf Information über ein Auslösen von ein oder mehreren Funktionen des ersten Fahrzeugs und auf einer Aktivität eines Fahrers des ersten Fahrzeugs (100; 100b; 100c) basiert, wobei die Information über das Auslösen von ein oder mehreren Funktionen des Fahrzeugs ein oder mehrere Indikatoren über einen Einsatz des ersten Fahrzeugs (100c) als Sondereinsatzfahrzeug umfasst;
Bestimmen (220; 220b; 220c) einer Warnbenachrichtigung, basierend auf der Information über die Gefahrensituation; und
Bereitstellen (230; 230b; 230c) der Warnbenachrichtigung über ein Ausgabemodul.

4. Programm mit einem Programmcode zum Durchführen zumindest eines der Verfahren gemäß einem der vorhergehenden Ansprüche wenn der Programmcode auf einem Computer, einem Prozessor, einem Kontrollmodul oder einer programmierbaren Hardwarekomponente ausgeführt wird.

5. Vorrichtung (10; 10b; 10c) für ein Fahrzeug (100; 100b; 100c), umfassend
zumindest eine Schnittstelle (12; 12b; 12c), ausgebildet zum Erhalten von Information über ein Auslösen von ein oder mehreren Funktionen des Fahrzeugs (100; 100b; 100c); und
ein Kontrollmodul (14; 14b; 14c), ausgebildet zum:
Erhalten von Information über einen Fahrzustand des Fahrzeugs (100c), wobei der Fahrzustand anzeigt, ob das Fahrzeug (100c) fährt oder steht,
Bestimmen einer Gefahrensituation, basierend auf den ein oder mehreren ausgelösten Funktionen des Fahrzeugs (100; 100b; 100c), basierend auf einer Information über einen Fahrzustand des Fahrzeugs, und abhängig von einer aktuellen Aktivität eines Fahrers des Fahrzeugs (100; 100b; 100c), und
Bereitstellen von Information über die Gefahrensituation über eine Fahrzeug-zu-Fahrzeug-Schnittstelle (16; 16b; 16c),
wobei die Information über das Auslösen von ein oder mehreren Funktionen des Fahrzeugs ein oder mehrere Indikatoren über einen Einsatz des Fahrzeugs (100c) als Sondereinsatzfahrzeug umfasst, wobei das Bestimmen der Gefahrensituation Information über einen Einsatz des Fahrzeugs als Sondereinsatzfahrzeug so bestimmt, dass die Information über den Einsatz des Sondereinsatzfahrzeugs anzeigt, dass das Fahrzeug (100c) als Sondereinsatzfahrzeug eine Gefahrenstelle sichert wenn die ein oder mehreren Indikatoren über den Einsatz des Fahrzeugs als Sondereinsatzfahrzeug ein Auslösen einer Rundumkennleuchte des Fahrzeugs (100c) anzeigen, wenn die Information über den Fahrzustand des Fahrzeugs (100c) anzeigt, dass das Fahrzeug (100c) steht, und wenn die aktuelle Aktivität des Fahrers einem Sichern einer Unfallstelle entspricht,
wobei festgestellt wird, dass die aktuelle Aktivität des Fahrers einem Sichern einer Unfallstelle entspricht, wenn eine Tür des Fahrzeugs (100c) geöffnet ist oder eine Ladeklappe des Fahrzeugs (100c) geöffnet ist.

6. Ein System, umfassend die Vorrichtung für ein erstes Fahrzeug gemäß Anspruch 5 und eine zweite Vorrichtung (20; 20b; 20c) für ein zweites Fahrzeug (200; 200b; 200c), die zweite Vorrichtung umfassend
eine Fahrzeug-zu-Fahrzeug-Schnittstelle (22; 22b; 22c), ausgebildet zum Erhalten von Information über eine Gefahrensituation von dem ersten Fahrzeug (100; 100b; 100c), wobei die Information über die Gefahrensituation auf Information über ein Auslösen von ein oder mehreren Funktionen des ersten Fahrzeugs und auf einer Aktivität eines Fahrers des ersten Fahrzeugs (100; 100b; 100c) basiert, wobei die Information über das Auslösen von ein oder mehreren Funktionen des ersten Fahrzeugs ein oder mehrere Indikatoren über einen Einsatz des ersten Fahrzeugs (100c) als Sondereinsatzfahrzeug umfasst; und
ein Kontrollmodul (24; 24b; 24c), ausgebildet zum:
Bestimmen einer Warnbenachrichtigung, basierend auf der Information über die Gefahrensituation, und
Bereitstellen der Warnbenachrichtigung über ein Ausgabemodul (26; 26b; 26c).

## Claims

1. Method for a vehicle (100; 100b; 100c), comprising
obtaining (110; 110b; 110c) information about a triggering of one or more functions of the vehicle (100; 100b; 100c);
obtaining information about a driving status of the vehicle (100c), wherein the driving status indicates whether or not vehicle (100c) is driving or stationary,
determining (120; 120b; 120c) a dangerous situation, based on the one or more triggered functions of the vehicle (100; 100b; 100c), based on information about a driving status of the vehicle, and depending on a current activity of a driver of the vehicle (100; 100b; 100c);
providing (130; 130b; 130c) information about the dangerous situation via a vehicle-to-vehicle interface,
wherein the information about the triggering of one or more functions of the vehicle comprises one or more indicators about a deployment of the vehicle (100c) as a special response vehicle, wherein the determination (120c) of the dangerous situation determines information about a deployment of the vehicle as a special response vehicle, in such a way that the information about the deployment of the special response vehicle indicates that the vehicle (100c) is securing a hazard site as a special response vehicle if the one or more indicators about the deployment of the vehicle as a special response vehicle indicate a triggering of a rotating beacon of the vehicle (100c), if the information about the driving status of the vehicle (100c) indicates that the vehicle (100c) is stationary, and if the current activity of the driver corresponds to that of securing a scene of an accident,
wherein it is determined that the current activity of the driver corresponds to that of securing a scene of an accident if a door of the vehicle (100c) is open, or a tailgate of the vehicle (100c) is open.

2. Method according to Claim 1,wherein
the provision (140; 140b; 140c) comprises a provision of a Decentralized Environmental Notification Message, DENM,
and/or wherein the vehicle-to-vehicle interface is designed to communicate in accordance with the vehicle-to-vehicle communication standard IEEE 802.11p,
and/or wherein the provision (140; 140b; 140c) complies with a direct provision for vehicles in an environment of the vehicle-to-vehicle interface.

3. Method comprising
carrying out the steps of the method from either of Claims 1 and 2 by way of a first vehicle, and
by way of a second vehicle:
obtaining (210; 210b; 210c) information about a dangerous situation from the first vehicle (100; 100b; 100c) via a vehicle-to-vehicle interface,
wherein the information about the dangerous situation is based on information about a triggering of one or more functions of the first vehicle and on an activity of a driver of the first vehicle (100; 100b; 100c), wherein the information about the triggering of one or more functions of the vehicle comprises one or more indicators about a deployment of the vehicle (100c) as a special response vehicle;
determining (220; 220b; 220c) a warning notification based on the information about the dangerous situation; and
providing (230; 230b; 230c) the warning notification via an output module.

4. Program with a program code for carrying out at least one of the methods according to any one of the preceding claims when the program code is executed on a computer, a processor, a control module or a programmable hardware component.

5. Device (10; 10b; 10c) for a vehicle (100; 100b; 100c), comprising
at least one interface (12; 12b; 12c) designed to obtain information about a triggering of one or more functions of the vehicle (100; 100b; 100c); and
a control module (14; 14b; 14c), designed to:
obtain information about a driving status of the vehicle (100c), wherein the driving status indicates whether or the vehicle (100c) is driving or stationary,
determine a dangerous situation, based on the one or more triggered functions of the vehicle (100; 100b; 100c), based on information about a driving status of the vehicle, and depending on a current activity of a driver of the vehicle (100; 100b; 100c), and
provide information about the dangerous situation via a vehicle-to vehicle interface (16; 16b; 16c),
wherein the information about the triggering of one or more functions of the vehicle comprises one or more indicators about a deployment of the vehicle (100c) as a special response vehicle, wherein the determination of the dangerous situation determines information about a deployment of the vehicle as a special response vehicle, in such a way that the information about the deployment of the special response vehicle indicates that the vehicle (100c) is securing a hazard site as a special response vehicle if the one or more indicators about the deployment of the vehicle as a special response vehicle indicate a triggering of a rotating beacon of the vehicle (100c), if the information about the driving status of the vehicle (100c) indicates that the vehicle (100c) is stationary, and if the current activity of the driver corresponds to that of securing a scene of an accident,
wherein it is determined that the current activity of the driver corresponds to that of securing a scene of an accident if a door of the vehicle (100c) is open, or a tailgate of the vehicle (100c) is open.

6. System comprising the device for a first vehicle according to Claim 5 and a second device (20; 20b; 20c) for a second vehicle (200; 200b; 200c), the second device comprising
a vehicle-to-vehicle interface (22; 22b; 22c), designed to obtain information about a dangerous situation from the first vehicle (100; 100b; 100c), wherein the information about the dangerous situation is based on information about a triggering of one or more functions of the first vehicle and on an activity of a driver of the first vehicle (100; 100b; 100c), wherein the information about the triggering of one or more functions of the vehicle comprises one or more indicators about a deployment of the vehicle (100c) as a special response vehicle; and
a control module (24; 24b; 24c), designed to:
determine a warning notification, based on the information about the dangerous situation, and
provide the warning notification via an output module (26; 26b; 26c).

## Revendications

1. Procédé pour un véhicule (100 ; 100b ; 100c), comprenant :
obtention (110 ; 110b ; 110c) d'informations à propos d'un déclenchement d'une ou de plusieurs fonctions du véhicule (100 ; 100b ; 100c) ;
obtention d'informations à propos d'un état de déplacement du véhicule (100c), l'état de déplacement indiquant si le véhicule (100c) se déplace ou est à l'arrêt,
détermination (120 ; 120b ; 120c) d'une situation de danger en se basant sur l'une ou les plusieurs fonctions déclenchées du véhicule (100 ; 100b ; 100c), en se basant sur une information à propos d'un état de déplacement du véhicule et en fonction d'une activité actuelle d'un conducteur du véhicule (100 ; 100b ; 100c) ;
fourniture (130 ; 130b ; 130c) d'informations à propos de la situation de danger par le biais d'une interface de véhicule à véhicule,
les informations à propos du déclenchement d'une ou de plusieurs fonctions du véhicule comprenant un ou plusieurs indicateurs à propos d'une utilisation du véhicule (100c) en tant que véhicule d'intervention spéciale, la détermination (120c) de la situation de danger déterminant des informations à propos de l'utilisation du véhicule en tant que véhicule d'intervention spéciale de telle sorte que les informations à propos de l'utilisation du véhicule en tant que véhicule d'intervention spéciale indiquent que le véhicule (100c), en tant que véhicule d'intervention spéciale, sécurise un point de danger lorsque l'un ou les plusieurs indicateurs à propos de l'utilisation du véhicule en tant que véhicule d'intervention spéciale indiquent un déclenchement d'un gyrophare du véhicule (100c), lorsque les informations à propos de l'état de déplacement du véhicule (100c) indiquent que le véhicule (100c) est à l'arrêt et lorsque l'activité actuelle du conducteur correspond à une sécurisation du lieu d'un accident,
l'activité actuelle du conducteur étant constatée comme correspondant à une sécurisation du lieu d'un accident lorsqu'une portière du véhicule (100c) est ouverte ou un hayon du véhicule (100c) est ouvert.

2. Procédé selon la revendication 1,
la fourniture (140 ; 140b ; 140c) comprenant une fourniture d'un message de notification d'environnement décentralisé, DENM,
et/ou l'interface de véhicule à véhicule étant configurée pour communiquer conformément à la norme de communication de véhicule à véhicule IEEE 802.11p,
et/ou la fourniture (140 ; 140b ; 140c) correspondant à une fourniture directe pour les véhicules dans un environnement de l'interface de véhicule à véhicule.

3. Procédé, comprenant
par un premier véhicule, exécution des étapes du procédé selon l'une des revendications 1 ou 2, et
par un deuxième véhicule :
obtention (210 ; 210b ; 210c) d'informations à propos d'une situation de danger de la part du premier véhicule (100 ; 100b ; 100c) par le biais d'une interface de véhicule à véhicule,
les informations à propos de la situation de danger se basant sur des informations à propos d'un déclenchement d'une ou de plusieurs fonctions du premier véhicule et sur une activité d'un conducteur du premier véhicule (100 ; 100b ; 100c), les informations à propos du déclenchement d'une ou de plusieurs fonctions du véhicule comprenant un ou plusieurs indicateurs à propos d'une utilisation du premier véhicule (100c) en tant que véhicule d'intervention spéciale ;
détermination (220 ; 220b ; 220c) d'une notification d'avertissement en se basant sur les informations à propos de la situation de danger ; et
fourniture (230 ; 230b ; 230c) de la notification d'avertissement par le biais d'un module de sortie.

4. Programme comprenant un code de programme destiné à mettre en œuvre au moins l'un des procédés selon l'une des revendications précédentes lorsque le code de programme est exécuté sur un ordinateur, un processeur, un module de contrôle ou un composant matériel programmable.

5. Arrangement (10 ; 10b ; 10c) pour un véhicule (100 ; 100b ; 100c), comprenant
au moins une interface (12 ; 12b ; 12c), configurée pour obtenir des informations à propos d'un déclenchement d'une ou de plusieurs fonctions du véhicule (100 ; 100b ; 100c) ;
un module de contrôle (14 ; 14b ; 14c), configuré pour :
obtenir des informations à propos d'un état de déplacement du véhicule (100c), l'état de déplacement indiquant si le véhicule (100c) se déplace ou est à l'arrêt,
déterminer une situation de danger en se basant sur l'une ou les plusieurs fonctions déclenchées du véhicule (100 ;
100b ; 100c), en se basant sur une information à propos d'un état de déplacement du véhicule et en fonction d'une activité actuelle d'un conducteur du véhicule (100 ; 100b ; 100c), et
fournir des informations à propos de la situation de danger par le biais d'une interface de véhicule à véhicule (16 ; 16b ; 16c),
les informations à propos du déclenchement d'une ou de plusieurs fonctions du véhicule comprenant un ou plusieurs indicateurs à propos d'une utilisation du véhicule (100c) en tant que véhicule d'intervention spéciale, la détermination de la situation de danger déterminant des informations à propos de l'utilisation du véhicule en tant que véhicule d'intervention spéciale de telle sorte que les informations à propos de l'utilisation du véhicule en tant que véhicule d'intervention spéciale indiquent que le véhicule (100c), en tant que véhicule d'intervention spéciale, sécurise un point de danger lorsque l'un ou les plusieurs indicateurs à propos de l'utilisation du véhicule en tant que véhicule d'intervention spéciale indiquent un déclenchement d'un gyrophare du véhicule (100c), lorsque les informations à propos de l'état de déplacement du véhicule (100c) indiquent que le véhicule (100c) est à l'arrêt et lorsque l'activité actuelle du conducteur correspond à une sécurisation du lieu d'un accident,
l'activité actuelle du conducteur étant constatée comme correspondant à une sécurisation du lieu d'un accident lorsqu'une portière du véhicule (100c) est ouverte ou un hayon du véhicule (100c) est ouvert.

6. Système, comprenant l'arrangement pour un véhicule selon la revendication 5 et un deuxième arrangement (20 ; 20b ; 20c) pour un deuxième véhicule (200 ; 200b ; 200c), le deuxième arrangement comprenant
une interface de véhicule à véhicule (22 ; 22b ; 22c), configurée pour obtenir des informations à propos d'une situation de danger de la part du premier véhicule (100 ; 100b ; 100c),
les informations à propos de la situation de danger se basant sur des informations à propos d'un déclenchement d'une ou de plusieurs fonctions du premier véhicule et sur une activité d'un conducteur du premier véhicule (100 ; 100b ; 100c), les informations à propos du déclenchement d'une ou de plusieurs fonctions du premier véhicule comprenant un ou plusieurs indicateurs à propos d'une utilisation du premier véhicule (100c) en tant que véhicule d'intervention spéciale ; et
un module de contrôle (24 ; 24b ; 24c), configuré pour :
déterminer une notification d'avertissement en se basant sur les informations à propos de la situation de danger, et
fournir la notification d'avertissement par le biais d'un module de sortie (26 ; 26b ; 26c).
